# EUROPEAN PATENT APPLICATION

(11) **EP 4 424 218 A2**
(43) Date of publication of application: **04.09.2024**
(21) Application number: 24161221.7
(22) Date of filing: 04.03.2024
(51) Int. Cl.: A47J 44/00, B25J 11/00

(54) **MODULAR ROBOT COOKING MACHINE**

(30) Priority: 03.03.2023 EP 23160073
(71) Applicant: GoodBytz GmbH, 22089 Hamburg (DE)
(72) Inventor: SUSEMIHL, Hendrik, 22089 Hamburg (DE); BROCKMANN, Jannick, 22089 Hamburg (DE); BONAS, Julian, 22089 Hamburg (DE); DEUTMARG, Kevin, 22089 Hamburg (DE); MARKS, Lucas, 22089 Hamburg (DE); VON STÜRMER, Philipp, 22089 Hamburg (DE); STAUDE, Till, 22089 Hamburg (DE)
(74) Representative: Schulz Junghans Patentanwälte PartGmbB

(57) **Abstract**

The present invention relates to a system for robot-based preparation of food, comprising: a portioning module (100) configured to receive ingredients of the food, wherein the portioning module comprises a portioning unit configured to portion ingredients into a receptacle (90) configured to receive the portioned ingredients, and a robot module (40) comprising an end effector (20) configured to grip the receptacle (90), wherein the robot module (40) is configured to transport the receptacle (90) and the portioned ingredients therein from the portioning module to another position away from the portioning module for processing the portioned ingredients.

## Description

The present invention relates to a system for robot-based preparation of food (also denoted as dish) as well as to a method for robot-based preparation of food for herein. Further aspects relate to a method using a system for robot-based preparation of food and corresponding computer programs.

In the prior art, cooking robots are typically static designs that are difficult to adapt to different scenarios.

Based on the above, the problem to be solved by the present invention is to provide a system for robot-based preparation of food, particularly dishes, and corresponding methods that are more versatile and allow adapting the system to different tasks and requirements.

This problem is solved by a system having the features of claim 1, a method having the features of claim 13, a method having the features of claim 14 and a computer program having the features of claim 15. Preferred embodiments of these aspects of the present invention are stated in the dependent claims and are described below. Further aspects of the present invention are also stated below.

According to claim 1, a system for robot-based preparation of dishes is disclosed, comprising:
- a portioning module configured to receive ingredients of the food, wherein the portioning module comprises a portioning unit configured to portion ingredients into a receptacle (such as e.g. a pot) configured to receive the portioned ingredients, and
- a robot module comprising an end effector configured to grip the receptacle, wherein the robot module is configured to transport the receptacle and the portioned ingredients therein from the portioning module to another position away from the portioning module for processing the portioned ingredients.

Particularly, the system can comprise multiple robot modules. For instance, the robot modules can be arranged on both sides of a preparation module, wherein particularly one robot module can be configured to deliver ingredients, wherein the other robot module can be configured to unload e.g. processed ingredients. In principle, an arbitrary number of robot modules can be used, as desired.

According to a preferred embodiment of the system, portioning module comprises a housing defining a workspace of the portioning module and/or wherein the robot module comprises a housing defining a workspace of the robot module.

Furthermore, according to a preferred embodiment of the system, the respective housing comprises at least one interface for connecting the housing to at least one interface of an adjacent housing of a module so that the workspace of the respective housing is connected to a workspace of the adjacent housing, wherein the respective housing is configured to be connected to the adjacent housing by multiple fastening means, such that the at least one interface of the respective housing presses against the at least one interface of the adjacent housing, preferably via an intermediate sealing arranged between the interfaces.

Particularly, the respective fastening means can be a bolt and a corresponding nut, or a bolt configured to engage with a thread. Other fastening means are also conceivable. Particularly the fastening means are releasable fastening means, i.e., fastening means that can be released (e.g. manually) without destroying the fastening means.

According to a preferred embodiment of the system, the housing of the portioning module and the housing of the robot module each comprise at least one interface for connecting the housing of the portioning module to the housing of the robot module, so that the workspace of the portioning module is connected to a workspace of the robot module, wherein the housing of the portioning module is configured to be connected to the housing of the robot module by multiple fastening means, such that the at least one interface of the housing of the portioning module presses against the at least one interface of the housing of the robot module, preferably via an intermediate sealing arranged between the interfaces.

According to a preferred embodiment, the respective housing comprises a plurality of interfaces for connecting the respective housing to interfaces of adjacent housings of another module. Particularly, the housing of the robot module comprises four interfaces on all four lateral sides of the robot module, each interface configured to be connected to an interface of a housing of another module. Particularly, an interface of the housing of the robot module is configured to be connected to an interface of the housing of the portioning module so that the workspaces of the housings of the robot module and portioning module communicate.

According to a preferred embodiment of the system, the at least one interface of the respective housing surrounds an access opening of the respective housing, the access opening being formed in a lateral side of the respective housing and allowing access to the workspace of the respective housing.

Thus, when the housings of two adjacent modules are connected via two opposing interfaces, the access openings surrounded by these interfaces are aligned and thus connect the workspaces of the two modules.

Particularly, the modules are connected to each other via the interfaces and secured at fixed positions, e.g. at four corners of the interfaces. In case a given module (e.g. a preparation module, see further down below), provides access openings only on its two opposing lateral long sides, either two adjacent modules close off the workspace by flush closure or, if a module is placed only on one long side, an insertable closure wall closes off the workspace space on one long side. Said fixed positions for securing the modules can be located at four corner points on the respective lateral side of the housing of the respective module. However, said fixed positions (connection points) can also be arranged at other positions.

According to a preferred embodiment of the system, one of the two interfaces comprises a sealing or the sealing is arranged between the opposing interface. Particularly, the sealing extending along the access openings such that the connected workspaces are sealed from an outside of the system by the sealing.

Further, according to a preferred embodiment of the system, the end effector of the robot module is movably connected to a top wall of the housing of the robot module via a robot arm, such that the end effector is configured to be moved within the workspace of the robot module.

According to yet another preferred embodiment of the system, the robot arm comprises at least one rotary actuator, such that the end effector is configured to be pivoted about a pivot axis defined by the rotary actuator, wherein preferably the robot arm comprises multiple rotary actuators, particularly six rotary actuators, wherein each rotary actuator defines a respective pivot axis, such that the end effector is configured to be pivoted about multiple pivot axes defined by the rotary actuators, or wherein the robot arm is further configured to be moved along three different linear axes.

Furthermore, according to a preferred embodiment of the system, the robot arm is connected to the top wall of the housing of the robot module by an (e.g. linear) actuator, such that the complete robot arm is configured to be moved along an axis within the workspace of the robot module (e.g. along the top wall).

Furthermore, according to a preferred embodiment of the system, the robot module is configured to move the end effector into a workspace defined by a housing of an adjacent module that is connected to the robot module, wherein particularly the robot module is configured to move the end effector into the workspace of the adjacent module through the aligned access openings of the housings of the two modules.

Furthermore, according to a preferred embodiment of the system, the robot arm, comprises a receptacle scale configured to determine a weight of the receptacle and the portioned ingredients therein when the receptacle is held by the end effector.

Furthermore, according to a preferred embodiment of the system, the robot module comprises a control unit configured to control movement of the end effector (particularly within the workspace of the robot module and adjacent workspaces of one or several other modules).

According to yet another preferred embodiment of the system, the end effector comprises a gripper configured to grip the receptacle by providing a magnetic field to attract and hold the receptacle.

In a preferred embodiment, the end effector comprises a mechanical gripper comprising a fixed finger and a pivotable finger to grip a receptacle, wherein the pivotable finger is bi-stable and comprises a stable closed position and a stable open position.

Preferably, the mechanical gripper is configured to be releasably connected to the gripper by said magnetic field.

According to a preferred embodiment, the pivotable finger is connected to a spring element that exerts a force onto the pivotable finger in the closed position to hold the pivotable finger in the closed position, and that exerts a force onto the pivotable finger in the open position to hold the pivotable finger in the open position.

Furthermore, in a preferred embodiment, the mechanical gripper comprises an actuating lever wherein the lever comprises a first stop and a second stop, wherein when the end effector is moved against the structure so that the structure engages the first stop, the actuating lever triggers movement of the pivotable lever from the closed position into the open position, and when the end effector is moved against a structure so that the structure engages the second stop, the actuating lever triggers movement of the pivotable finger from the open position to the closed position.

Particularly, the actuating lever is pivotably mounted to a support structure of the fingers.

Particularly the support structure forms a contact surface that is configured to be releasably connected to the gripper by said magnetic field provided by the gripper.

Furthermore, according to a preferred embodiment, the pivotable finger can be adapted to different geometries of the receptacle to be gripped by proving a replaceable attachment on the pivotable finger that effectively alters the shape of the pivotable finger.

Furthermore, according to a preferred embodiment of the system, the portioning module comprises at least one container for storing an ingredient.

Furthermore, according to a preferred embodiment of the system, wherein the at least one container is configured to be arranged in a holding structure of the portioning module.

Furthermore, according to a preferred embodiment of the system, the portioning module is configured to be connected to the robot module such that the holding structure is arranged on a first side of the portioning module facing away from the robot module so that the holding structure can be accessed from the first side (e.g. by a person).

In a further preferred embodiment of the system, the portioning unit comprises a conveying unit for the at least one container, the conveying unit being configured to convey the ingredient from the at least one container towards a dosing chamber of the portioning unit.

Furthermore, according to a preferred embodiment of the system, the portioning unit comprises a control unit that is configured to control a conveying rate of the conveying unit, such that a predetermined amount of the ingredient controlled by the control unit can be conveyed towards the dosing chamber.

Furthermore, according to a preferred embodiment of the system, the conveying unit is arranged below the at least one container, wherein particularly the at least one container is configured to be fastened on top of the conveying unit, such that an ingredient residing in the at least one container can fall into the conveying unit below the at least one container and can be conveyed towards the associated dosing chamber.

Particularly, the portioning unit comprises a rotary actuator for the conveying unit, which rotary actuator drives a spindle arranged in the conveying unit via a clutch which provides the propulsion of ingredients from the at least one container towards the portioning chamber to eventually drop the ingredients into the associated dosing chamber.

Furthermore, according to a preferred embodiment of the system, the conveying unit comprises a flap configured to provide a connection between the conveying unit and the associated dosing chamber arranged below the flap, such that a conveyed ingredient can fall into the associated dosing chamber when the flap is open, wherein particularly the flap is opened when the conveying unit is inserted into the portioning unit, wherein the flap engages with a stop of the portioning unit so that the flap is opened upon said insertion of the conveying unit into the portioning unit.

Furthermore, according to a preferred embodiment of the system, wherein the dosing chamber comprises a dosing flap, wherein the dosing flap is configured to be opened to let an ingredient fall out of the respective dosing chamber into said receptacle when being held by the end effector of the robot module below the dosing chamber, wherein particularly the control unit of the portioning unit is configured to generate a control signal to let an (e.g. linear or rotary) actuator of the portioning unit cause a pivoting movement of the dosing flap thereby opening the dosing flap. Particularly, in case of a linear actuator, the latter can press down on a lever with a plunger which leads to said pivoting movement of the dosing flap. However also other actuators such as rotary actuators can be employed for opening the dosing flap.

Furthermore, according to a preferred embodiment of the system, the portioning unit comprises a scale configured to measure a total weight of the dosing chamber and the portioned ingredient therein.

Furthermore, according to a preferred embodiment of the system, the system is configured to use the scale to check whether the dosing chamber has been mounted to the portioning unit, and/or wherein the system is configured to use the scale in combination with an actuator of the conveying unit and the control unit to optimize a control strategy for the respective ingredient to be conveyed.

Furthermore, according to yet another a preferred embodiment of the system, the control unit is configured to control a rotary actuator of the portioning unit depending on the ingredients in the at least one container to drive a spindle arranged in the conveying unit via a clutch to convey an ingredient from the at least one container into the associated dosing chamber until the ingredient conveyed into the associated dosing chamber comprises a desired weight as weighed by means of the scale, whereupon the control unit is configured to generate a control signal to let an (e.g. linear or rotary) actuator of the portioning unit cause a pivoting movement of the dosing flap thereby opening the dosing flap so that the ingredient falls into the receptacle, and wherein the control unit is configured to compare a weight of the ingredient that has fallen into the dosing chamber as measured by the scale against the weight as measured by the receptacle scale.

Thus, advantageously a pre-portioning of a precise ingredient quantity can be achieved before the robot arm has to position receptacle below the dosing chamber. Furthermore, in this fashion parallel pre-portioning of several ingredients in several receptacles can be achieved at the same time. Furthermore, it is possible to identify when ingredients are used up because the desired weight cannot be reached. Further, an identification of jammed ingredients is possible be letting the control unit monitor the rotary actuator. Furthermore, it can be monitored whether the dosing chamber has been mounted to the portioning unit by preloading the scale with the calibrated weight of the dosing chamber. Furthermore, it is possible to check if ingredients jam or get stuck in the dosing chamber, e.g. in case the receptacle scale cannot measure the same amount as the scale after opening the dosing flap. Furthermore, the control strategy can be automatically identified by using the scale and the control unit by running different speeds, accelerations, and back-and-forth conveying methods through the actuator and identifying which strategy works best. Furthermore, it is possible to identify, how much remaining ingredients are left in the container and conveying unit by knowing the initial quantity and continuously subtracting the pre-portioned content. Finally, repositioning of the receptacle is possible and thus precise placement of the contents in any sort of receptacle can be achieved (e.g., for topping processes of dishes).

Furthermore, according to a preferred embodiment of the system, wherein the portioning unit comprises a sealing wall separating the at least one container from the associated dosing chamber, wherein the sealing wall (102a) comprises a through-opening for the conveying unit, such that an ingredient can be conveyed from the container towards the associated dosing chamber via the conveying unit through said through-opening.

Furthermore, according to a preferred embodiment of the system, wherein the system further comprises a preparation module comprising a preparation unit for preparing ingredients residing in the receptacle.

Furthermore, according to a preferred embodiment of the system, a housing of the preparation module comprises at least one interface for connecting the housing of the preparation module to the housing of the robot module, so that a workspace of the preparation module defined by the housing of the preparation module is connected to the workspace of the robot module, wherein the housing of the preparation module is configured to be connected to the housing of the robot module by multiple fastening means, such that the at least one interface of the housing of the preparation module presses against the at least one interface of the housing of the robot module, particularly via an intermediate sealing.

Furthermore, according to a preferred embodiment of the system, the preparation unit comprises at least one receptacle carrier arranged on a first side of the preparation module, which first side is configured to face the robot module, wherein the robot module is configured to transport the receptacle and the portioned ingredients therein from the portioning module to the at least one receptacle carrier of the preparation unit for preparing the portioned ingredients by the preparation unit.

Furthermore, according to a preferred embodiment of the system, the preparation unit comprises a heating device that is configured to heat the receptacle and the portioned ingredients therein.

According to a preferred embodiment, the heating device can comprise one or more induction cooktops

Furthermore, according to a preferred embodiment, the preparation unit comprises one of the following: a steamer, a blast freezer, an oven, a deep fryer, a pasta cooker, a grill, sous-vide cooker, a stove, a smoker, a 3D food printer, a flambe device, a microwave oven, an induction cooktop.

Furthermore, according to a preferred embodiment of the system, the receptacle carrier comprises at least three rollers configured for contacting an outside of the receptacle so as to receive it in a central area between the rollers, wherein the rollers are arranged parallel to each other and configured to be set in rotation around a respective roller axis of the respective roll, such that a rotation of the rollers causes a rotation of the receptacle comprising the portioned ingredients.

Further, in a preferred embodiment of the system the preparation module comprises a control unit that is configured to control an actuator, the actuator being configured to generate a rotation of at least one of the rollers, such that the rotation of the receptacle can be controlled by the control unit, and/or wherein the control unit is configured to control said heating of said receptacle, particularly upon rotation of the receptacle. Particularly, the control unit is a local control unit that can receive requests for tasks from the central control unit of the system and then executes them together with the local control electronics.

Furthermore, according to a preferred embodiment of the system, the rollers are inclined with respect to a vertical axis (particularly directed along the direction of gravity), preferably by an angle between 0° and 60, more preferably 35° to 45° such that ingredients residing in the receptacle slide down the inclination due to gravity, particularly under rotation of the receptacle. Preferably, said angle is adjustable to a desired value between 0° and 60°, wherein preferably said angle is non-zero and the preparation unit is configured to temporarily adjust the angle to 0°.

Furthermore, according to a preferred embodiment of the system, the system further comprises a dishwashing module comprising a dishwashing unit for washing receptacles and further equipment and appliances, and a housing defining a workspace of the dishwashing unit.

Preferably, the dishwashing unit is configured to be operated in automatic mode and in manual mode. In automatic mode, individual receptacles (pots, plates, trays, containers etc.) are picked up by a robot and then arranged on a receptacle carrier rack of the dishwashing unit. The dishwashing unit comprises a rack for carrying the receptacle carrier rack. The dishwashing unit is configured to clean a plurality of receptacles at the same time. In manual mode, either exactly the same is done by hand or a completely prepared basket with wash ware (receptacles or other components) is arranged in the dishwashing machine instead of the receptacle carrier rack and then the wash program is started.

Furthermore, according to a preferred embodiment of the system, the dishwashing module comprises a robot arm, wherein the robot arm is configured to load receptacles into a rinsing space of the dishwashing unit and to unload cleaned receptacles from the rinsing space of the dishwashing unit.

Particularly, the robot arm of the dishwashing unit is configured to access the workspace of the dishwashing module as well as to reach into the workspace of a transfer module configured to be arranged adjacent the dishwashing module (see further below) and connected thereto.

Furthermore, according to a preferred embodiment of the system, the system comprises a transfer module comprising a housing defining a workspace of the transfer module, the housing comprising an interface configured to be connected to an interface of the housing of the dishwashing module to connect the workspace of the transfer module to the workspace of the dishwashing module, wherein the transfer unit is configured to:
- receive at least one receptacle to be cleaned from the robot module at a loading zone (particularly outside the workspace of the transfer module) when the robot module is connected to the transfer module,
- transfer the receptacle to be cleaned from the loading zone to a gripping zone of the workspace of the transfer module, wherein an end effector of the robot arm of the dishwashing module is configured to grip the receptacle in the gripping zone and arrange it on a receptacle carrier rack in the rinsing space of the dishwashing unit,
- receive a cleaned receptacle at a storage zone from the robot arm of the dishwashing module, and
- transfer the cleaned receptacle from the storage zone to an unloading zone of workspace of the transfer module.

Preferably, the dishwashing unit comprises a movable protective door that has the function to protect the rinsing space safely from access of persons while the robot arm acts automatically. This door can be pushed down for manual use, which causes the robot arm to withdraw from the rinsing space, so that receptacles can be loaded manually.

Furthermore, according to an embodiment of the system, the transfer unit comprises a first receptacle conveyor configured to transport the receptacle to be cleaned from the loading zone to the gripping zone, and a second conveyor to transport the cleaned receptacle from the storage zone to the unloading zone.

Furthermore, according to an embodiment of the system, the system comprises a user interface configured to allowing a user to input a recipe instruction sequence by inputting a sequence of process instructions in arbitrary order, wherein the user interface preferably allows at least one of:
- Input of portioning instructions for controlling the portioning module, the portioning instructions preferably comprising at least one of the following parameters: type of an ingredient, quantity of the ingredient;
- Input of preparation instructions for controlling the preparation module, the preparation instructions preferably comprising at least one of the following parameters: an electrical power (particularly of the induction cooktops or of other devices), a temperature, a humidity, a duration, a turning frequency, a turning speed, a rotation frequency, a duration of the rotation;
- Input of preparation instructions for controlling a topping module of the system, the topping module being configured to provide a topping on top of a dish, the preparation instructions preferably comprising at least one of the following parameters: type of an ingredient, quantity of the ingredient, placement position of the topping on the dish;
- Input of secondary process instructions for controlling the dishwashing module, the secondary process instructions preferably comprising at least one of the following parameters: rinse program, temperature
- Input of secondary process instructions for controlling a periphery module of the system, the secondary process instructions preferably comprising one of the following parameters: suction intensity, air cleaning mode.

According to a further aspect of the present invention, a method for robot-based preparation of food is disclosed, particularly using a system according to the present invention, the method comprising:
- automatically portion ingredients into a receptacle by a portioning module, and
- automatically gripping the receptacle by a robot module, and transporting, by the robot module, the receptacle and the portioned ingredients therein from the portioning module to another position away from the portioning module for processing the portioned ingredients.

Furthermore, according to an embodiment of the method, wherein said portioning is controlled (e.g. by a control unit) based on one, several, or all of:
- an actual weight of a dosing chamber and the portioned ingredient therein (e.g. as measured by a scale), wherein particularly the dosing chamber is comprised by the portioning unit and provides the portioned ingredient to the receptacle.
- a conveying rate of a conveying unit of the portioning module, which conveying unit conveys an ingredient from a container to the dosing chamber,
- an actual weight of the receptacle including portioned ingredients therein (e.g. measured by a receptacle scale of an end effector of a robot arm of the robot module).

Furthermore, according to an embodiment of the method, during automatically portioning ingredients, the receptacle held by the end effector is moved relative to the portioning unit along multiple dosing chambers to portion ingredients into the receptacle.

Furthermore, according to an embodiment of the method, the robot module transports the receptacle to one of the following modules:
- a preparation module for preparing the portioned ingredients,
- a transfer module for transporting the receptacle to a dishwashing module,
- a dishwashing module for dishwashing the receptacle.

Furthermore, according to an embodiment of the method, the receptacle and the portioned ingredients therein are heated by the preparation module, wherein a temperature of the receptacle and a time period during which the receptacle is heated is controlled.

In a further preferred embodiment of the method, the at least one receptacle is automatically rotated by the preparation module around a rotation axis, wherein a rotation frequency and/or a duration of the rotation of the pot is controlled, wherein preferably the rotation axis encloses an acute angle with the vertical axis in the range from 0° to 60°, preferably 35° to 45°.

Further, according to an embodiment of the method, the receptacle is automatically loaded by a robot arm of a dishwashing module into a rinsing space of a dishwashing unit of the dishwashing module and washed therein and subsequently automatically unloaded by the robot arm from the rinsing space of the dishwashing unit.

Furthermore, according to an embodiment of the method, the receptacle is automatically transported by a transfer module to the dishwashing module, wherein
- the receptacle is received at a loading zone by the transfer module from a robot module (e.g., the robot module being connected to the transfer module),
- the receptacle is transferred from the loading zone to a gripping zone of the transfer module, wherein said robot arm of the dishwashing module grips the receptacle in the gripping zone and arranges it on a receptacle carrier rack in the rinsing space of the dishwashing unit,
- the cleaned receptacle is transferred from the rinsing space by the robot arm of the dishwashing module to a storage zone of the transfer module, and
- the cleaned receptacle is transferred from the storage zone to an unloading zone of the transfer module.

Furthermore, according to an embodiment of the method, the method further comprises receiving from a user by a user interface of the system a recipe instruction sequence comprising a sequence of process instructions, wherein preferably at least one of the following process instructions are input by the user:
- Portioning instructions for controlling the portioning module, the portioning instructions preferably comprising at least one of the following parameters: type of an ingredient, quantity of the ingredient;
- Preparation instructions for controlling the preparation module, the preparation instructions preferably comprising at least one of the following parameters: a power (particularly of the induction cooktops or of other devices), a temperature, a humidity, a duration, a turning frequency, a turning speed, a rotation frequency, a duration of the rotation;
- Preparation instructions for controlling a topping module of the system, the topping module being configured to provide a topping on top of a dish, the preparation instructions preferably comprising at least one of the following parameters: type of an ingredient, quantity of the ingredient, placement position of the topping on the dish;
- Secondary process instructions for controlling the dishwashing module, the secondary process instructions preferably comprising at least one of the following parameters: rinse program, temperature;
- Secondary process instructions for controlling a periphery module of the system, the secondary process instructions preferably comprising at least one of the following parameters: suction intensity, air cleaning mode.

According to a further aspect of the present invention, a method using a system for robot-based preparation of food is disclosed, particularly a system according to the present invention, the system comprising a planning optimizer module and a process execution module, wherein the method comprises:
- receiving at least one order input for food comprising ingredients to be prepared by the system by an ordering interface of the system,
- providing initial status information to the planning optimizer module about a status of the modules of the system,
- based on the order input, the initial status information and at least one (particularly preselected) parameter to be minimized, determine, by the planning optimizer module, a preparation plan for preparation of the food, wherein the initial status information is indicative of the status of the modules of the system at the beginning of said determination of the preparation plan,
- providing the preparation plan to a process execution module which generates control signals that cause the system to prepare the food based on the preparation plan and under consideration of status information about the actual status of the modules of the system and minimization of the at least one (e.g. preselected) parameter to be minimized.

Particularly, according to a preferred embodiment of the present invention, the status information can comprise one, several or all of the following information:
- which resources (e.g. modules of the system, such as robot module, portioning module, preparation module, dishwashing module) are in use and for how long,
- what is the filling level of ingredients, i.e., is it still enough for a specific dish?
- what is the maximum energy consumption in the current preparation plan,
- malfunction messages of single modules of the systems that work limited or not at all,
- system states or actions like cleaning cycles.

Furthermore, according to an embodiment of the method, the method further comprises (subsequent to receiving the at least one order input and prior to providing said initial status information) transferring the at least one order input to the planning optimizer module.

Furthermore, according to an embodiment of the method, the method further comprises (subsequent to receiving the at least one order input and prior to providing said initial status information) transferring the at least one order input to the process execution module, wherein the planning optimizer module receives the order input from the process execution module.

In a further preferred embodiment of the method, the initial status information is also provided to the process execution module.

Furthermore, according to yet another embodiment of the method, the process execution module provides (e.g. feeds back) an optimized current preparation plan as input to the planning optimizer module.

Furthermore, according to an embodiment of the method, the planning optimizer module outputs information to a user about the current preparation plan, and/or wherein the process execution module outputs information to a user about the execution of the current preparation plan.

Furthermore, according to an embodiment of the method, the at least one parameter to be minimized comprises or is one of the following:
- a preparation time for preparing the food (also denoted as dish herein) according to the order input, defined by the time between the provision of the order input and the provision of the prepared food,
- an energy consumption of the system required to prepare the ingredients according to the input order.
- a sum of preparation times of several dishes ordered at the same time, particularly under the constraint that differences in preparation times between any two of the several dishes shall be minimal.

Thus, particularly, in the last item, the parameter corresponds to a preparation time, which is optimized for the simultaneous completion of several dishes, which were ordered collectively at the same time and should have a completion time that is as similar as possible (e.g. someone orders three dishes, then one optimizes not to prepare each as quickly as possible, but to complete all three in total as quickly as possible, but also as simultaneously as possible).

Furthermore, according to an embodiment of the method, the food is prepared according to a preselected priority, which causes at least a first dish corresponding to a first order input to be prepared before at least a second dish corresponding to a subsequent second order input.

Furthermore, according to yet another embodiment of the method according to the present invention, as an extension of the method according to the present invention boundary conditions can be provided that enable the optimization logic in certain limits to shift already planned process steps in the preparation plan, so that optimizing the above-mentioned parameters can be improved. According thereto delays can be inserted with dishes already in the preparation process

In a preferred embodiment, the preparation plan at the start of a preparation of a dish is delayed so that a completion time of the dish fits exactly into a desired schedule.

Furthermore, according to an embodiment of the method, parameters of a process step in the preparation plan are altered towards the end so that the process step s either extended or delayed.

In practical terms, this means, for example, that on an induction cooktop, the power is reduced or increased shortly before the end in order to delay or accelerate the preparation process. However, this preferably happens within defined limits that only slightly affect the quality of the dish, which can be set in the configuration of the optimization logic.

According to a further aspect of the present invention, a computer program is disclosed, the computer program comprising instructions which, when the computer program is executed by a system according to the present invention, cause the system to execute a method according to one of the claims 13 to 14.

Furthermore, according to yet another aspect of the present invention, a dishwashing module is disclosed. The dishwashing module a dishwashing unit for washing receptacles (and other objects) and a housing defining a workspace of the dishwashing unit. Preferably, the dishwashing module comprises a robot arm, wherein the robot arm is configured to load receptacles (or other objects) into a rinsing space of the dishwashing unit and to unload cleaned receptacles (or objects) from the rinsing space of the dishwashing unit. The dishwashing module can be further characterized by the features of the dependent claims relating to the dishwashing module and by the features all embodiments of the dishwashing module described herein.

In the following embodiments of the aspects of the present invention as well as further features and advantages shall be described with reference to the Figures, wherein
- Figs. 1A-1B: shows an embodiment of a module of a system according to the present invention;
- Figs. 2A-2B: shows an embodiment of a robot module of a system according to the present invention;
- Figs. 3A-3B: shows an embodiment of a portioning module of a system according to the present invention that is used to portion ingredients into receptacles that are transported by at least one robot module;
- Fig. 4: shows an embodiment of a portioning unit of the portioning module of Figs. 3A to 3B;
- Figs. 5A-5B: shows an embodiment of a preparation module of a system according to the present invention;
- Figs. 6A-6B: shows an embodiment of a dishwashing module of a system according to the present invention with optional transfer module;
- Fig. 7: shows an illustration of an embodiment of a control scheme that can be used in the context of the system and method according to the present invention;
- Figs. 8A-8B: shows embodiments of a method for planning and optimizing a preparation plan as well as controlling preparation of the respective dish according to the preparation plan;
- Fig. 9: shows an illustration of a preparation plan for preparing dishes ordered at different points in time;
- Fig. 10: shows an embodiment of a user interface of the system for inputting process instructions; and
- Figs. 11A-11B: shows an embodiment of a bi-stable mechanical gripper that can be used with an end effector of a robot arm of the system according to the present invention.

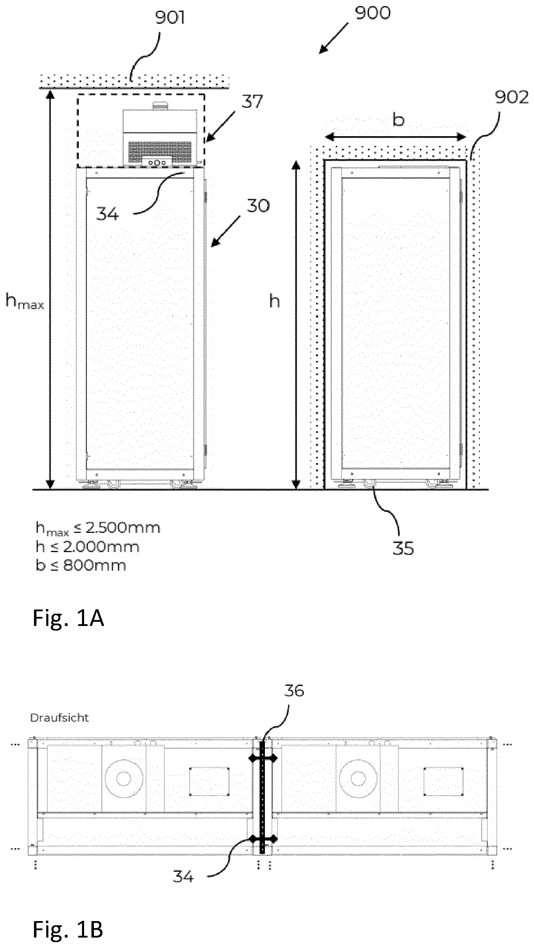

Fig. 1A shows in conjunction with Fig. 1B an embodiment of a typical module 30 of a system for robot-based preparation of food, particularly an arbitrary number of dishes that can be ordered in an arbitrary order, particularly at the same time or subsequently. The individual features of module 30 shown in Figs. 1A and 1B can apply to all possible modules of the system, particularly a robot-module 40, a portioning module 100, a preparation module 200, a dishwashing module 400 and other modules.

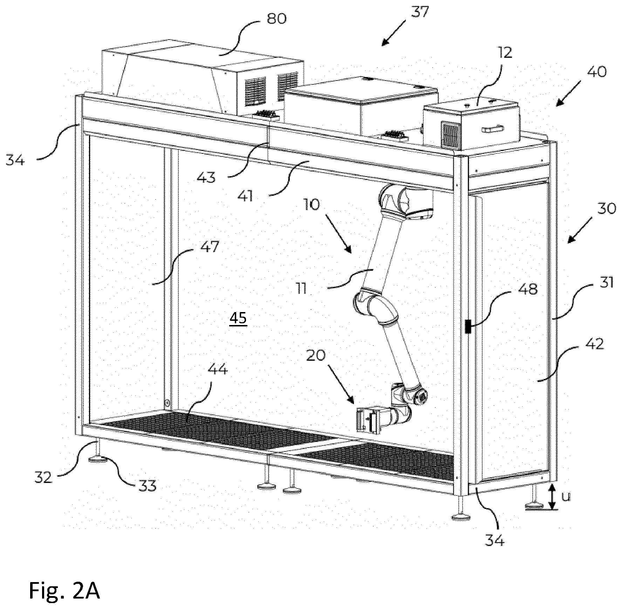

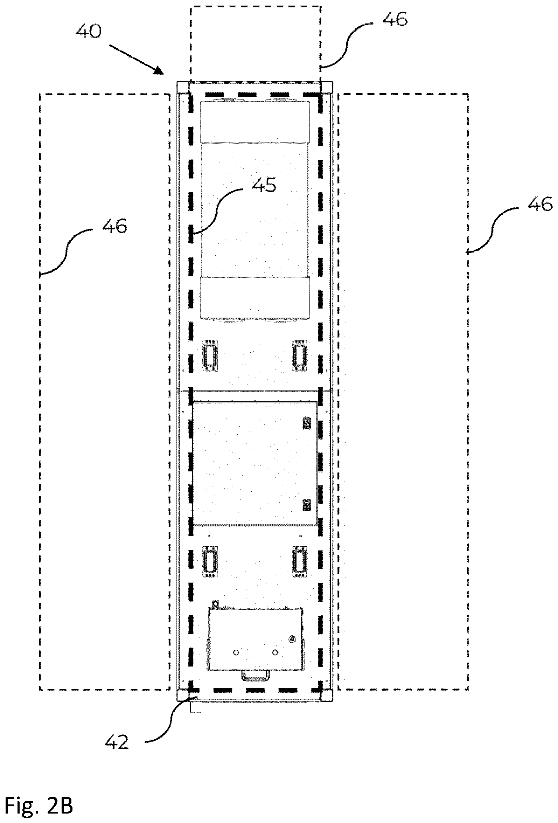

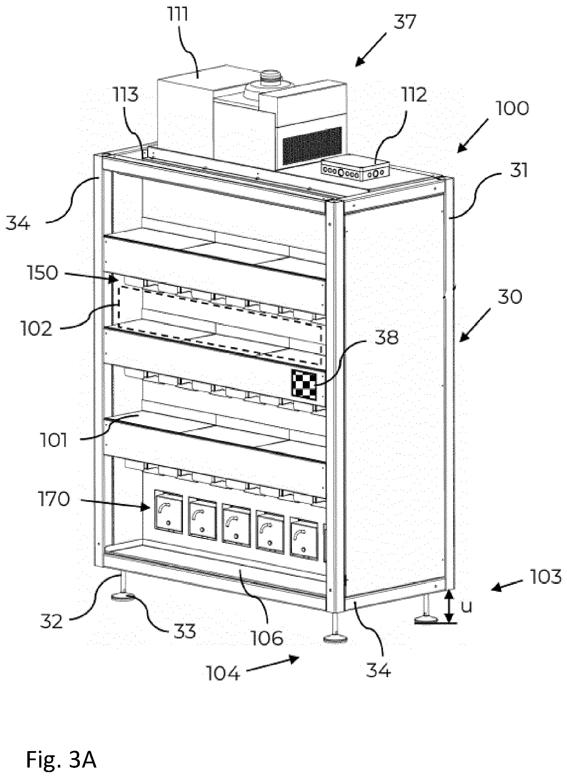

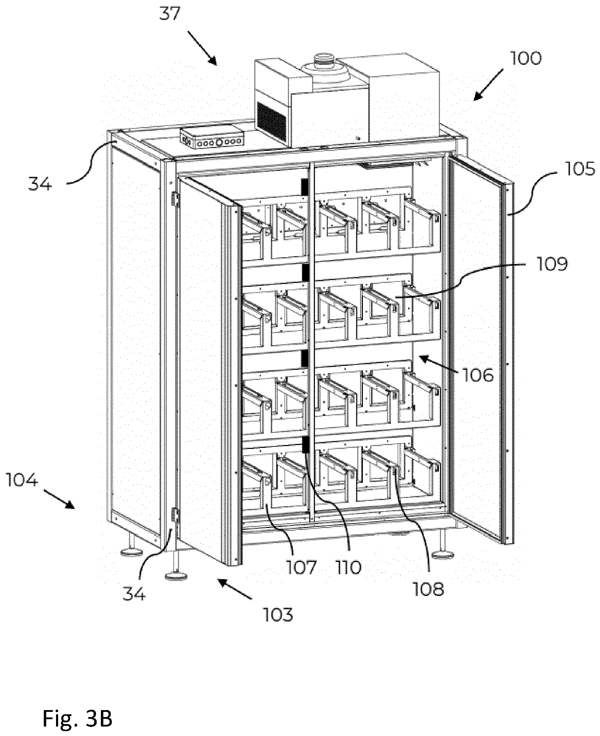

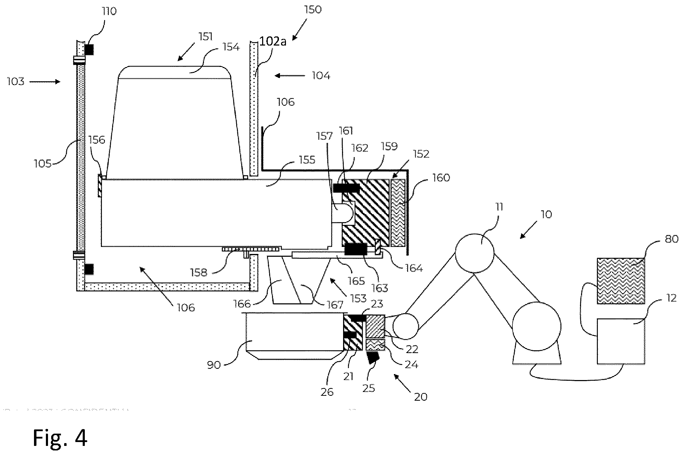

The system according to the present invention preferably comprises a portioning module 100 (cf. Figs. 3A, 3B and 4) configured to receive ingredients of the food / dishes to be prepared, wherein the portioning module 100 comprises a portioning unit 150 configured to portion ingredients into a receptacle 90 configured to receive the portioned ingredients, and a robot module 40 (cf. Figs. 2A and 2B) comprising an end effector 20 configured to grip the receptacle 90, wherein the robot module 40 is configured to transport the receptacle 90 and the portioned ingredients therein from the portioning module 100 to another position away from the portioning module 100 for processing the portioned ingredients.

The receptacle 90 can be any receptacle 90 that is suitable for serving food. Particularly the receptacle can be any container, plate etc. that can carry any sort of food.

Particularly, the system can comprise multiple robot modules 40. For instance, the robot modules 40 can be arranged on both sides of a preparation module 200, wherein particularly one robot module 40 can be configured to deliver ingredients, wherein the other robot module 40 can be configured to unload e.g. processed ingredients. In principle, an arbitrary number of robot modules 40 can be used, as desired.

Other minimum of the configuration of the system are also conceivable, for instance a robot module 40 and a preparation module 200.

Preferably, the present invention advantageously adapts to spatial limitations often present in rooms of ordinary buildings. The modular system of the present invention can therefore be installed indoors in a variety of different configurations without the need for a special room layout. Preferably, the form factor 900 of the modules 30, 40, 100, 200, 400 is adapted such that each module comprises a maximum height hₘₐₓ smaller or equal than 2.500 mm. The respective module thus fits in all rooms having a typical height of the ceiling 901 of 2.5 m. Preferably, the respective module comprises a releasable top portion 37 which can e.g. accommodate a control unit, if necessary, and/or other additional peripherals. Preferably, without the top portion 37, the height of the module is smaller or equal to h=2.000 mm. Furthermore, the width b of the respective module preferably is smaller or equal to 800 mm. Thus, without the top portion 37, the respective module can be transported through openings of ordinary door frames 902 as shown in Fig. 1A.

Furthermore, the respective module 30 is supported on a rolling system 35 so that the respective module 30 can be rolled. The respective module comprises a housing 31 that can comprise a carrier frame with open lateral sides that can form access openings to a workspace 45 defined by the respective housing 31. The housings 31 of each two neighboring modules can be connected to one another via an interface formed by the respective housing. The interface can be formed by a lateral side of the housing 31, particularly of its carrier frame and surrounds the respective access opening. Preferably, a sealing 36 can be arranged between the two opposing interfaces. The sealing 36 is squeezed when the housings are connected so that the connected workspaces 45 are separated from the outer space to ensure hygiene. Connection between the housings 31 can be made by suitable fastening means 34 such as bolts (cf. Fig. 1B). Such fastening means 34 can be arranged e.g. at all four corners of the carrier frame on the lateral sides of the housings 31 involved in the connection. By way of this connection the workspaces 45 of two connected modules can communicate via the aligned access openings of the two modules. Open sides / access openings that are not needed for connecting to a neighboring module's workspace 45 can be closed with wall elements or doors 42 allowing a person to enter the respective workspace 45 if needed.

Furthermore, each two modules of the system can be releasably connected to one another so that a desired configuration of the system comprising certain modules can be easily achieved. Particularly, the modules 30, 40, 100, 200, 400 are supported on feet 33 can be slid together in any arrangement, leveled on the floor via a leveling mechanism 32 and connected to each other. Furthermore, preferably, the housings 31 of the modules 30, 40, 100, 200, 400 can be configured to be placed more than u= 150mm above the floor so that cleaning can be done underneath them (cf. Fig. 2A).

The system can therefore be adapted to different kind of food preparation, from hot to cold dishes. In case a module is connected to a robot module 40, the working space 45 of the robot module 40 is extended to the working spaces 45 of the adjacent modules so that an extended workspace 46 of the robot module 40 is achieved which is indicated in Fig. 2B. Preferably this extended workspace 46 is separated from humans. The robot workspace 45 separated from humans can be expanded by any additional module around the robot module 40.

Preferably, the robot module 40 (cf. Figs. 2A to 2B) comprises a robot arm 10, having e.g. a multi-axis kinematics 11, with 3 or more axes, and allows quick installation in any space. Preferably, all required systems are pre-installed in the top portion 37 of the module 40 that fits through any doorway when the top portion 37 is removed. Particularly, the top portion 37 can comprise a central control unit 80 that can be used to control the whole system, and a control unit 12 for controlling the robot arm 10.

Preferably, the robot arm 10 is mounted to a ceiling/top wall 43 of the housing 31 of the robot module 40 either fixed or on an axis 41 so that the robot arm 10 can be moved along the ceiling 43 in the workspace 45 of the robot module.

Furthermore, the robot module can be walked on through a door 42, so that adjacent modules are easily accessible. The door 42 and a safety sensor 48 regulate safe access to the workspace 45. Further, the module floor 44 can be easily removed, so that the floor underneath the modules next to the robot module 40 can be easily cleaned. Lateral sides of the housing 31 of the robot module 40 that are not needed for providing access to an adjacent workspace of a connected module can be closed with a wall element 47 that can be reliably connected to the carrier frame of the housing.

Other modules that can be used together with the robot module in preferred embodiments of the system according to the present invention can be or comprise: a preparation module, cooking/induction plates / cooktops, a combi steamer, a combi steamer and chiller, a pasta cooker, a portioning module 100, a dishwashing module 400, a deep fryer, an oven, a dressing module, a plate/bowl stacking and transfer module 500.

Examples of peripheral modules are air extraction and filtration, water treatment, food waste shredder and separation of solids and liquids.

In a preferred embodiment, the system is further configured to conduct a method for referencing of modules with respect to the extended robot workspace, and is configured to move the robot arm to reference points, all further program points are then moved according to the module base system in the robot base system. Furthermore, preferably the system can conduct a camera calibration via reference targets, wherein all further program points are shifted according to the module base system in the robot base system.

Furthermore, generally, the system can be extended by a transfer line for receptacles (like pots, bowls, trays, plates, containers etc.) that connects two or more modules to one another in order to circumvent spatial limitations or create space for accesses or further kitchen equipment not connected to the robot module.

As indicated in Fig. 2A, the robot module 40 comprises an end effector 20 comprising a gripper 21 that preferably functions according to an electromagnetic gripping principle. Gripper 21 is designed to grip said receptacles 90 to transport them between different modules and to grip adapters. Particularly, the gripper 21 can reliably connect to a mechanical gripper that will be described further down below. Preferably, as already indicated above, one lateral side of the robot module is designed for access by persons (e.g. through door 42), wherein the interior/workspace 45 of the robot module 40 can be entered in order to reach other, connected modules.

Particularly, the robot module 40 provides three lateral sides / interfaces for connection with further modules such as preparation modules 200, other robot modules 40, or peripheral modules in such a way that the robot arm 10 can access its safe extended workspace 46, separated from people, within the other modules (cf. Fig. 2B).

Due to the linear axis 41, the robot arm 100 can open up the full rectangular workspace 45 and avoid collisions with neighboring modules due to the robot's own arm geometry.

Furthermore, the step-resistant floor elements 44, which also serve as a drip and collection tray for ingredients, can be easily be removed to provide access to the floor of the room for cleaning. For this reason, the robot is preferably located on the ceiling 43 of the robot module 40 so that floor 44 is removable and the primary workspace is accessible.

Particularly, a robot module 44 can be connected to a mobile portioning module 100 as described above (cf. Figs. 3A to 3B). The portioning module 100 comprises an access side 103 (cf. Fig. 2B) accessible for persons (e.g. to supply ingredients to the portioning module 100) and another portioning side 104 (cf. Fig. 2A) facing away from said access side 103, which portioning side 104 provides access for a robot arm 10 of a robot module 40 as described above. On the access side 103 the portioning module 100 comprises several compartments arranged vertically on top of one another for accommodating portioning units 150, 170 configured to portion solid and liquid ingredients for a dish to be prepared. Preferably, the portioning module 100 comprises a removable holder 107 for the portioning units 150, 170 and a locking device 108 (e.g. a quick-release fastener) for securing the portioning units 150, 170 when they are arranged side by side in the respective compartment in an air-conditioned area 106 of the portioning module 100 which comprises a climate sensor 110 to monitor the air-conditioned area 106. The air conditions area 106 can be closed by means of a thermally insulated door 105.

Furthermore, the portioning units 150 are equipped with containers 154 that are manipulated by a robot arm 10 of a robot module 40 and contain ingredients needed to prepare the respective dish / food. Each compartment can be equipped with either a portioning unit 150 for solid ingredients or a portioning unit 170 for liquid ingredients.

The ingredient containers 154 and dispensers of the portioning units 150, 170 can be changed from the access side 103 without stopping the robot module 40 and robot arm 10 during operation.

Preferably, the portioning module's housing 31 is supported on feet 33 and can be moved with a separable roller system and aligned with a leveling mechanism 32 and set up with a height u greater than 150 mm above the floor, so that cleaning underneath the portioning module 100 is easily possible.

Additional peripherals arranged in the removable top portion 37 of the module 100 can be detached for transport by means of quick-release connectors and the geometry of the housing / carrier frame 31 allows transport through any typical door (cf. Figs. 3A to 3B). The top portion 37 can comprise an air conditioning unit 111 for condition air in the air-conditioned area 106. and a (local) control unit 112 for controlling the portioning module 100, and particularly for simultaneously controlling several portioning units according to predefined recipes. Preferably, the portioning module or system is configured to measure, monitor and store the climatic conditions, such as temperature and humidity in different height gradations within the air-conditioned area 106.

The number of compartments for portioning units 150, 170 can be extended as required by aligning and connecting several modules 100 together. Between the modules 100, a sealing can seal the outer (manual) space from the inner space / workspace where the robot arm 10 operates as described before. Furthermore, surface elements 101 in the portioning area 102 for receptacles can be quickly removed and cleaned.

Furthermore, the system is configured to conduct referencing between the robot module 40 and portioning module 100 via reference targets 38, so that all portioning area 102 positions can be aligned with only one calibration.

Furthermore, Fig. 4 shows an embodiment of an individual portioning unit 150 of a portioning module 100 that can be designed as shown in Figs 3A to 3B. Preferably, the portioning unit 150 comprises a conveying unit 155 for a container 154 that comprises ingredients. The container 154 and conveying unit 155 can be mounted in the air-conditioned area 106 from the access side 103 through door 105. Container 154 and conveying unit 155 form part of an ingredient dispenser 151 and can be secured by means of fastener 156. The conveying unit can protrude through a self-closing door 109 into the portioning area 102, which is separated from the access side 103 by a sealing wall 102a.

The conveying unit 155 is configured to convey the ingredient from the container 154 towards a dosing chamber 166 of the portioning unit 150. To this end, the portioning unit 150 comprises a control unit 160 that is configured to control a conveying rate of the conveying unit 155, such that a predetermined amount of the ingredient controlled by the control unit 160 can be conveyed towards the dosing chamber 166. The container 154 is configured to be fastened on top of the conveying unit 155 such that an ingredient residing in the container 154 can fall into the conveying unit below the at least one container 154 and can be conveyed towards the associated dosing chamber 166. According to an embodiment, the portioning unit 150 comprises an actuator assembly 159 that comprises a rotary actuator 161 driving a spindle arranged in the conveying unit 155 via a clutch 157 which provides the propulsion of ingredients from the at least one container 154 towards the portioning chamber 166 to eventually drop the ingredients into the associated dosing chamber 166.

Furthermore, the conveying unit 155 comprises an openable flap 158 configured to provide a connection between the conveying unit 155 and the associated dosing chamber 166 arranged below the flap 158, such that a conveyed ingredient can fall into the associated dosing chamber 166 when the flap 158 is open. This open state is ensured by having the flap 158 opened when the conveying unit 166 is inserted into the area 106 of portioning unit 150 to rest on an associated holder 107. To this end, the flap 158 engages with a stop of the portioning unit 150 so that the flap 158 is opened upon said insertion of the conveying unit 155 into the portioning unit 150. Fig. 4 shows flap 158 in its open state.

To allow portioned ingredients to be delivered into receptacle 90 that is held below dosing chamber 166 by the robot arm 10 of an adjacent robot module 40, the dosing chamber 166 comprises a dosing flap 167 that is configured to be opened to let the ingredient fall out of the dosing chamber 166 into said receptacle 90. The dosing chamber and flap 166, 167 form parts of an output unit 153 of the portioning unit 150 and can preferably be disengaged therefrom by a quick release mechanism 165.

Particularly, control unit 160 of the portioning unit 150 is configured to generate a control signal to let a linear actuator 164 of the portioning unit 150 cause a pivoting movement of the dosing flap thereby opening the dosing flap 167. Particularly, in case of a linear actuator 164, the latter can press down on a lever with a plunger which leads to said pivoting movement of the dosing flap 167. However, also alternative actuators can be employed for opening the dosing flap 167.

Particularly, generation of said control signal depends on whether the desired amount of the ingredient that has been transferred into the dosing chamber 166. Preferably, the portioning unit 150 comprises a scale 163 configured to measure a total weight of the dosing chamber 166 and the portioned ingredient therein. Particularly, control unit 160 is configured to control said rotary actuator 161 of the portioning unit 150 to drive said spindle arranged in the conveying unit 155 via a clutch 157 to convey the ingredient from the container 154 into the associated dosing chamber 166 until the ingredient conveyed into the associated dosing chamber 166 comprises a desired weight as weighed by means of the scale 163. If this is the case said control signal is issued and the pivoting movement of the dosing flap 167 is caused to deliver the portioned ingredient to the receptacle 90. Preferably, the control unit 160 is configured to compare a weight of the ingredient that has fallen into the dosing chamber 166 as measured by the scale 163 against the weight as measured by a receptacle scale 23 that is comprised by the end effector 20 of the robot arm 10. Apart from the gripper 21 of the end effector 20, which gripper is mounted to a support 22 of the end effector 20, the end effector comprises control circuitry 24 and a camera system 25, e.g., for determining a position of the end effector 20. On the one hand, the control circuitry 24 is used to read out scale values of receptacle scale 23 and, at the same time, to control liquids, such as sauces, which are pumped directly into the receptacle 90 and are not pre-weighed in a dosing chamber. Furthermore, data from the camera system 25 that may comprise multiple cameras is processed and reference data between the position of the robot arm's 10 end effector 20 and other objects or entire modules is calculated.

Particularly, the portioning module 100 of the system according to the present invention realizes several functions and advantages. It allows highly accurate dosing of any food - solids or liquids - to the gram. Furthermore, parallel pre-dosing of several ingredients can be performed. The fast filling of pre-portioned food into receptacles 90 like pots or similar considerably increases the processing speed. Furthermore, the individual containers can quickly and easily replaced and re-filled during operation. Due to the possibility of a quick removal and separation of contaminated parts the system can be easily cleaned.

Furthermore, the arrangement of container and dosing system so that one side 103 is manually accessible and the other side 104 can be used in parallel by the moving robot arm improves efficiency and allows hygienic storage of foodstuffs and prevention of contamination or soiling. Furthermore, this aim is preferably also supported through automatic closure of the openings of the portioning module.

The portioning module 100 further allows to automatically detect whether ingredient dispenser 151 has been inserted correctly, whether the container 154 been inserted correctly, and also allows for automatically detecting whether ingredients have fallen into dosing chamber 166 in the desired quantity. Furthermore, the portioning module 100 preferably allows automatic calibration and optimization of the conveying and dosing speed as well as automatic detection of blockages or similar malfunctions.

Furthermore, the portioning module 100 achieves precise placement of foodstuffs for the preparation of dishes by simultaneous control of the respective portioning unit 150 and robot arm 10. Furthermore, a filling level of the respective container 154 can be monitored by automatic calculation of the filling level by weighing the dosed ingredient quantity. Further, the portioning unit allows to check whether new ingredient types can be dosed uniformly, reliably and in a desired time.

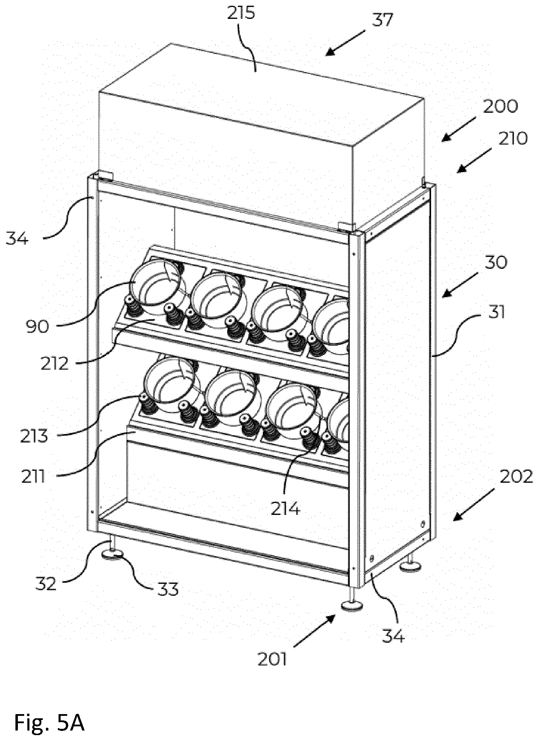

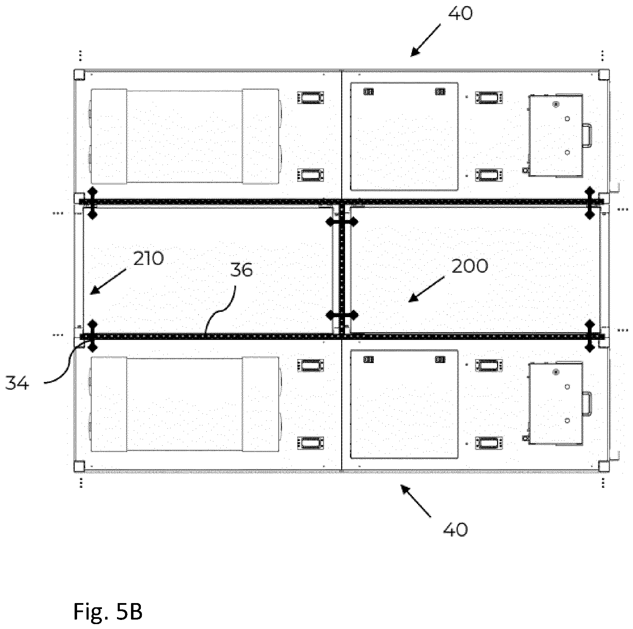

Fig. 5A shows in conjunction with Fig. 5B a preparation module 200, here comprising a preparation unit 210 in form of an induction module 210 for heating of receptacles 90, which preparation module 200 can be connected to one or more robot modules 40. Particularly, Fig. 5B shows the connection between two robot modules 40 that are connected via respective interfaces to corresponding interfaces of housings 31 of two preparation modules 200 by fastening means 34 and sealings 36 as described above, wherein the preparation modules 200 are arranged in between the robot modules 40.

The mobile preparation module 200 can comprise a front and a back accessible for multi-axis kinematics such as the robot arm 10 of the respective robot modules 40. Of course, a preparation module 200 can also be connected to a single robot module 40.

The preparation module can in principle comprising one of the following functionalities: induction hobs, combi steamers, blast freezers, ovens, deep fryers, pasta cookers, grills, sous-vide stoves, smokers, food 3D printers, flambé devices etc.

Here, in a preferred embodiment, the preparation module 200 comprises induction cooktops 212 that can be arranged side by side and on top of each other in such a way that the robot arm can access a receptacle 90 arranged on such a cooktop 212, preferably from both sides. Here, as an example, parallel preparation of eight dishes simultaneously is possible.

Containers are placed on actuated drive rollers 213 of a receptacle carrier 211 such that they are spaced apart from the respective cooktop 212 that heats the respective receptacle 90 and thus the ingredients therein by way induction, particularly using an induction coil.

Preferably the receptacle carrier 211 comprises at least three rollers 213 for each receptacle 90 configured for contacting an outside of the receptacle 90 so as to receive it in a central area between the rollers 213, wherein the rollers 213 are preferably arranged parallel to each other and are preferably configured to be set in rotation around a respective roller axis of the respective roller 213, such that a rotation of the rollers 213 causes a rotation of the receptacle 90 comprising the portioned ingredients. A control unit of the system is configured to control an actuator to generate a rotation of at least one of the rollers 213, such that the rotation of the receptacle 90 can be controlled. Preferably, the rollers 213 are inclined with respect to a vertical axis, preferably by an angle between 0° and 60, more preferably 35° to 45° such that ingredients residing in the receptacle 90 slide down the inclination due to gravity, particularly under rotation of the receptacle 90. Preferably, said angle is adjustable to a desired value between 0° and 60°, wherein preferably said angle is non-zero and the preparation unit is configured to temporarily adjust the angle to 0°. Particularly, the respective induction cooktop 212 and its induction coil can be inclined correspondingly so that the rollers 213 extend perpendicular to the cooktop / induction coil 212.

Particularly, the rollers 213 can have one actuator for all rollers or multiple actuators for one roller at a time. Rotation of the receptacles 90 is generated by frictional locking between the receptacle 90 and the rollers 213.

Furthermore, a position sensor can detect an angle of the receptacle, so that errors due to slippage and transmission inaccuracies can be compensated. Particularly, receptacles 90 can thus always be gripped in the same way.

Furthermore, receptacle carriers 211 are horizontally offset relative to each other in such a way that emissions from the receptacles 90 can pass by the carrier 211 and can be captured by the exhaust air.

Furthermore, preferably, the preparation module 200 comprises an energy balancing function, which limits the maximum simultaneous load of all induction cooktops 212 to below a threshold, e.g. 25kW, even when the maximum power of all induction cooktops 212 in simultaneous full operation is above this threshold.

The preparation module 200 further preferably comprises an exhaust hood 215 in the top portion 37 of the module 200. The exhaust hood 215 can be connected to a stationary exhaust air system or to a mobile exhaust air peripheral module and arranged spatially as desired.

Furthermore, the rotation speed of the rollers 213 and a rotation interval can be arbitrarily set via a user interface.

Preferably, the preparation module 200 is configured to be operated in such a way that the receptacle rotates and stops (particularly in an alternating fashion) such a way that the surface in the receptacle 90 that is not in contact with the food/ingredient to be cooked is briefly heated strongly for a short time and then, by rotating the receptacle by 180°, the food is turned and falls onto the heated surface of the receptacle 90, so that it can be fried quickly and particularly strong roasting aromas are produced.

According to yet another preferred embodiment, the preparation unit is configured to operate individual induction cooktops (or alternative cooking zones) so that they are cold (even without induction power), e.g. to prepare cold food. In this way sauces etc., can be evenly mixed due to the adjustable rotational speed and the rotational interval.

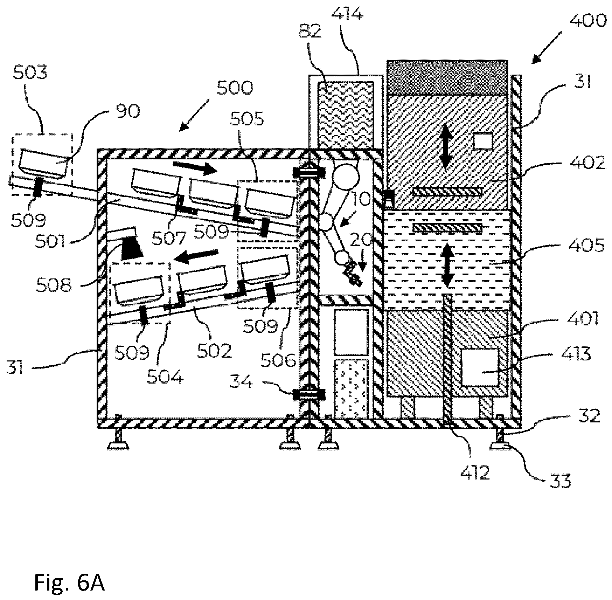

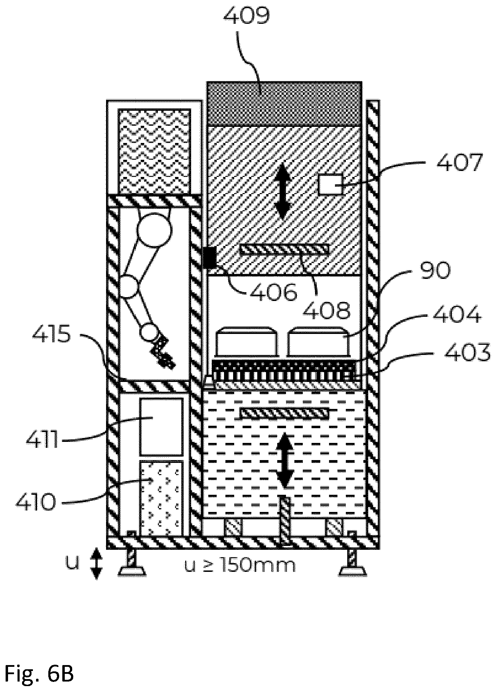

Furthermore, Fig. 6A shows in conjunction with Fig. 6B an embodiment of a dishwashing module 400 that can be used in the system according to the present invention to wash used receptacles 90. The dishwashing unit can be connected as described above to a transfer module 500 for automatically transporting receptacles towards and away from the dishwashing module. The dishwashing module can also be operated manually.

Preferably, the dishwashing module 400 allows automatic loading and unloading of multiple, different receptacles 90 for rinsing. This increases the number of receptacles 90 rinsed, as each rinse cycle has a minimum run time to completely remove dirt and kill germs. Furthermore, water and electricity are saved, as fewer rinses are required and the rinsing space is used optimally. Furthermore, the dishwashing module 400 is configured to always positions receptacles in the same way in the dishwashing unit 401 so that optimal rinsing results can be achieved.

Automatic and manual use of the dishwashing module 400 is possible, so that the dishwashing unit 401 can be used optimally in peak and off-peak times. Sequence control either triggers automatic closing and opening of the movable rinsing hood 402.

Furthermore, alternatively the rinsing hood 402 may be opened and closed completely manually by means of operating handle 408 (cf. Fig. 6B) or may automatically opened and closed after manual actuation of the opening and closing mechanism. Manual operating unit 407 may be used to operate dishwashing unit 401 manually (e.g. for initiating rinsing, or cleaning cooking ware or dosing chambers).

Furthermore, preferably, the dishwashing unit 401 comprises a movable safety door 405 that limits the workspace of the integrated robot arm 10 of the dishwashing unit 401 so that no manual intervention can take place. Particularly, the dishwashing module 400 comprises a gas spring 412 that automatically moves the movable safety door 405 upward and pushes it into a safety lock.

A receptacle carrier rack 404 that can be placed on rack 403 in the rinsing space holds receptacles 90 to be cleaned / rinsed in the rinsing space in position during rinsing, so that the gripping position can be easily found by the integrated robot arm 10 again during unloading. The receptacle carrier rack 404 supported on rack 403 is easily removable from the rinsing space, so that receptacle carrier racks 404 carrying receptacles to be washed can be inserted manually into the rinsing space of the dishwashing unit 401.

Preferably, the dishwashing unit is configured to detect whether receptacles 90 have been gripped correctly.

Particularly, the dishwashing module 400 can comprise a camera to check cleaning quality and can trigger a new rinsing process, wherein control unit 413 for controlling the rinsing process can generate a corresponding message.

Furthermore, the dishwashing module is configured to monitor the gripping zone 505 and storage zone 506 to detect receptacle to be cleaned or to transport away therein.

Preferably, the dishwashing module 400 is configured to provide separation of containers by a passive lever-spring mechanism to avoid scratching of receptacles 90 and to separate them for gripping.

Furthermore, as shown in Fig. 6A the dishwashing module 400 can be connected to a transfer module 500 as described herein via corresponding interfaces and a sealing arranged therebetween. As described before the connection can be secured using fastening means 34 such as bolts. The two modules 400, 500 can be pushed together and connected in several directions, depending on the space constraints.

The housings / carrier frames 31 of the modules 400, 500 separates moving parts from manual access in such a way that no crushing or disturbance of the process occurs.

Furthermore, the dishwashing module 400 is configured to monitor and store the rinsing system status for maintenance and wear prediction.

All auxiliary peripherals and cleaning equipment can be placed on the dishwashing module 400 for quick setup and reconfiguration. Particularly as shown in Fig. 6A a local control unit 82, e.g., for controlling the robot arm 10, can be arranged in the top portion of the module 400 above robot arm 10 and can be protected by a protective covering 414. Furthermore, as indicated in Fig. 6B also suction 409 for extracting humid air from the rinsing process can be arranged in the top portion of the dishwashing module 400. A decalcification system 411 as well as a cleaning agent 410 used for dishwashing can e.g. be arranged in a compartment of the module 400 below robot arm 10. Furthermore, the robot arm is positioned above a removable drip tray 415 to allow easy cleaning of the area below the robot arm 10. Further, sensor 406 monitors movement of the rinsing hood 402, e.g. to stop movement of the robot arm 10 to avoid collisions with persons when hood 402 is opened manually.

As the other modules, the dishwashing module 400 and the transfer module 500 comprise dimensions that allow easy transport through typical doorframes. The modules 400, 500 are preferably supported on feet 33 that can be leveled by means of a leveling mechanism 32, so that a floor height of the housings 31 of about 150 mm results which allows to clean the floor below the housings 31. Preferably, the rinsing hood 402 is automatically closed when not in use to save energy.

Furthermore, as shown in Fig. 6A when using a transfer module 500, a receptacle 90 to be cleaned is placed at a loading zone 503 manually or by a robot module 40 (which is not shown in Fig. 6A. Receptacle 90 is moved within the workspace of the transfer module 500 via a first conveyor 501 to the gripping zone 505 (this can happen actively as well as passively by inclination and gravity). Robot arm 10, which is an integral part of the dishwashing module 400, grips receptacle 90 from the gripping zone 505 and loads it onto the receptacle carrier rack 404 in the rinsing space of the dishwashing unit 401. After the loading is complete, rinsing hood 402 of the dishwashing unit 402 closes by moving vertically downwards, thus closing the rinsing space, the dishwashing process starts, after the end, the rinsing hood 402 opens again and the robot arm 10 unloads the cleaned receptacles 90 in the storage zone 506, these are transported within the workspace of the transfer module 500 via a second conveyor 502 to the unloading zone 504, from there another robot module 40, or the robot module 40 which initially loaded the receptacle 90 in the loading zone 503, can remove the clean receptacle 90 again. Alternatively, the receptacle 90 may be removed manually. According to a preferred embodiment, in the loading zone 503, a camera 508 is configured to simultaneously monitor the rinsing quality of the dishwashing unit 401. According to a further embodiment, sensors 509 of the transfer module 500 further detect at which positions receptacles 90 are currently located and a mechanical lever device 507 separates receptacles 90 from each other so that they do not damage each other and the respective robot arm 10 of a robot module 40 can cleanly separate the receptacles from each other.

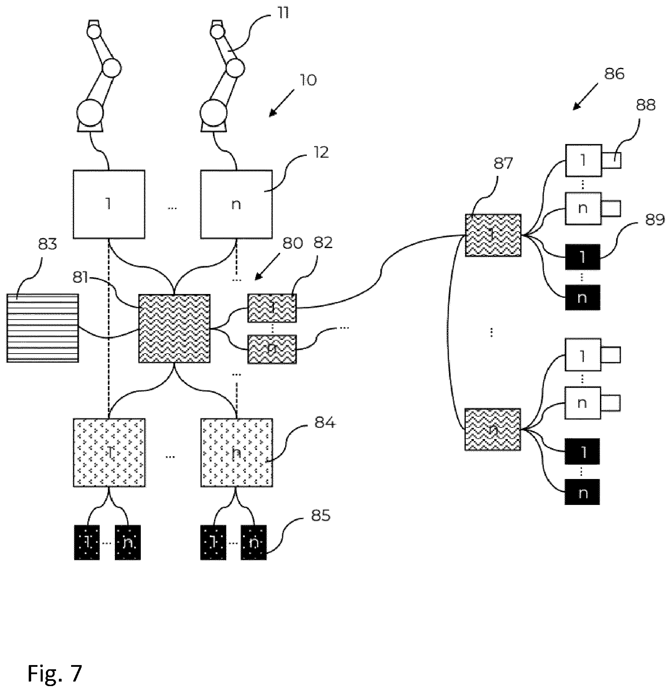

Fig. 7 shows an embodiment of controlling the various resources, particularly modules in a system according to the present invention.

Particularly, sensors 89 and drive units 88 of local control units 86 (e.g. in individual modules) can be connected via local control electronics 87 and a local sequence control unit 82 to a central sequence control unit 81 of a central control unit 80 (that may be arranged on a robot module 40) the central sequence control unit 81 (particularly for preparing dishes according to a preparation plan) communicates with the control units 12 of the individual robot arms 10 and can be supported by an external processing unit 83. Furthermore, the central sequence control unit 81 is connected to individual (e.g. local) safety control units 84 that receive inputs from local safety sensors 85.

This control scheme can be applied in the system and method according to the present invention to operate the above-described modules 40, 100, 200, 400, 500 to prepare dishes.

Preferably, the present invention allows to plan, optimize and control cooking processes in a modular system, which optimizes process steps on the basis of resources according to various criteria, and based on the different criteria creates a preparation plan that is preferably constantly updated with changes in conditions or new incoming orders.

Particularly, a process steps can be movement process, a preparation process, or other secondary processes.

The resources of the system correspond to the individual modules such as the robot module 40 and its robot am, portioning module 100, the preparation module 200, the dishwashing module 400, the transfer module 500 etc. and optionally but not mandatory the receptacles 90.

Optimization of the preparation plan can be performed according to: time, energy requirements, priority of cooking operations, processes or resources.

Preferably, the system allows shifting of already planned processes in order to parallelize randomly occurring new processes as efficiently as possible within the framework of defined limits/parameters, which do not significantly influence the cooking process.

Therefore, continuous monitoring of the process execution and adjustment of already planned processes is conducted by the system as described herein.

Both minimization methods and neural networks can be used to optimize the resource-based problem. The planning, optimization and execution of the process can either be done centrally or can be divided into individual components.

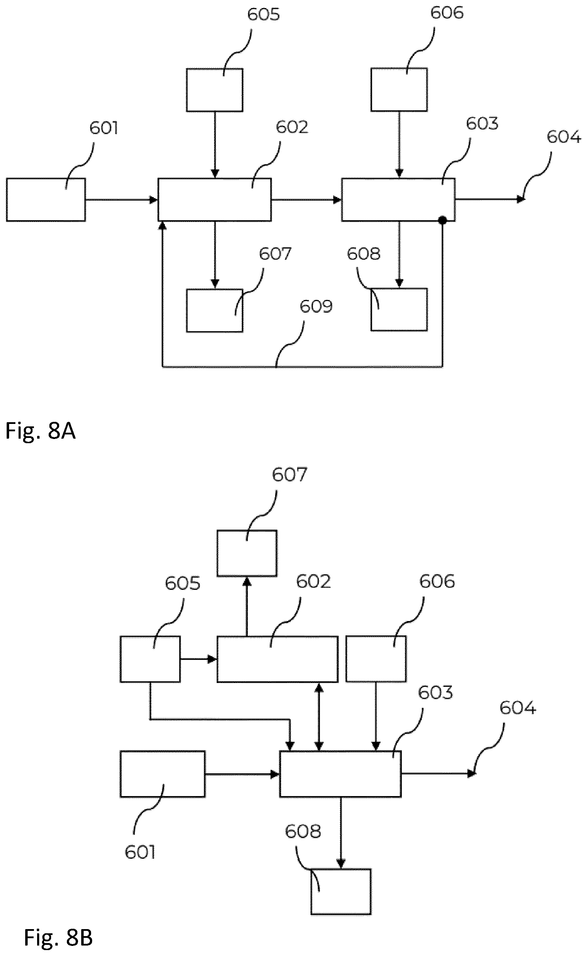

Furthermore, Figs. 8A and 8B show embodiments of a method that can use a system for robot-based preparation of food as described herein, wherein the system comprising a planning optimizer module 602 and a process execution module 603. These modules 602, 603 can be formed by software modules / routines of a computer program that conducts the method when the computer program is executed on the system (e.g. on external computer 83) or another suitable device. The modules 602, 603 can also be dedicated hardware devices configured to perform the functions described further below. Particularly, according to the embodiment shown in Fig. 8A, the method comprises
- receiving at least one order input for food (i.e. a dish to be prepared by the system) comprising ingredients to be prepared by the system by an ordering interface 601 of the system,
- transferring the at least one order input to the planning optimizer module 602.
- providing initial status information 605 to the planning optimizer module 602 about a status of the modules of the system,
- based on the order input, the initial status information and at least one (e.g. preselected) parameter to be minimized, determine, by the planning optimizer module, a preparation plan for preparation of the food, wherein the initial status information is indicative of the status of the modules of the system at the beginning of said determination of the preparation plan,
- providing the preparation plan to a process execution module which generates control signals that cause the system to prepare the food based on the preparation plan and under consideration of status information about the actual status of the modules of the system and minimization of the at least one (e.g. preselected) parameter to be minimized.

According to a preferred alternative embodiment / modification of the embodiment in Fig. 8B, the method comprises the following steps:
- receiving at least one order input for food (i.e. a dish to be prepared by the system) comprising ingredients to be prepared by the system by an ordering interface 601 of the system,
- transferring the at least one order input to the process execution module 603, wherein the planning optimizer module 602 receives the order input from the process execution module 603
- providing initial status information 605 to the planning optimizer module 602 and to the process execution module 603 about a status of the modules of the system,
- based on the order input, the initial status information and at least one parameter to be minimized, determine, by the planning optimizer module, a preparation plan for preparation of the food, wherein the initial status information is indicative of the status of the modules of the system at the beginning of said determination of the preparation plan,
- providing the preparation plan to a process execution module which generates control signals that cause the system to prepare the food based on the preparation plan and under consideration of status information about the actual status of the modules of the system and minimization of the at least one parameter to be minimized.

Particularly, the status information can comprise one, several or all of the following information:
- which resources (e.g. modules of the system, such as robot module 40, portioning module 100, preparation module 200, dishwashing module 400, transfer module 500 etc.) are in use and for how long,
- what is the filling level of ingredients (e.g. in containers 54), i.e., is it still enough for a specific dish?
- what is the maximum energy consumption in the current preparation plan,
- malfunction messages of single modules of the systems that work limited or not at all,
- system states or actions like cleaning cycles.

In both variants of the method, the process execution module 603 feeds back an optimized current preparation plan as input to the planning optimizer module 602.

Furthermore, in both variants of the method (cf. Fig. 8A and 8B) the planning optimizer module 602 outputs information 607 to a user interface and a software interface about the current preparation plan. Likewise, the process execution module 603 outputs information to a user interface and a software interface about the execution of the current preparation plan. Particularly, so as to allow the user to monitor the system and apply changes.

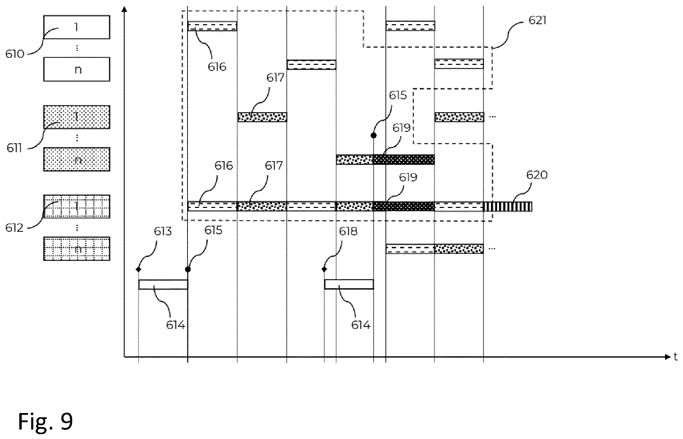

Fig. 9 illustrates a preparation plan for preparing dishes, wherein the dashed line marks a region belonging to a specific cooking process 621 related to an order input (here order input 613). The x-axis represents the time and is divided into a plurality of time intervals during which a process takes place. Indicated are the times of a first order input 613 and a subsequent second order input 618 each requiring a time span 614 for conducting planning/optimization process as e.g. shown in Figs 8A or 8B. The resources denoted as 610, 611, and 612 are indicated on the y-axis, here as an example a robot resource (e.g. use of a robot module 40), a preparation resource (e.g. use of preparation module 200), a receptacle resource 612. Points in time where the preparation plan is changed are indicated by reference label 615. Particularly, ordering process 613 results in movement processes 616, preparation processes 617, process delays 619, and secondary process 620.

Particularly, delays in time can be applied in order to better adjust different processes to one another.

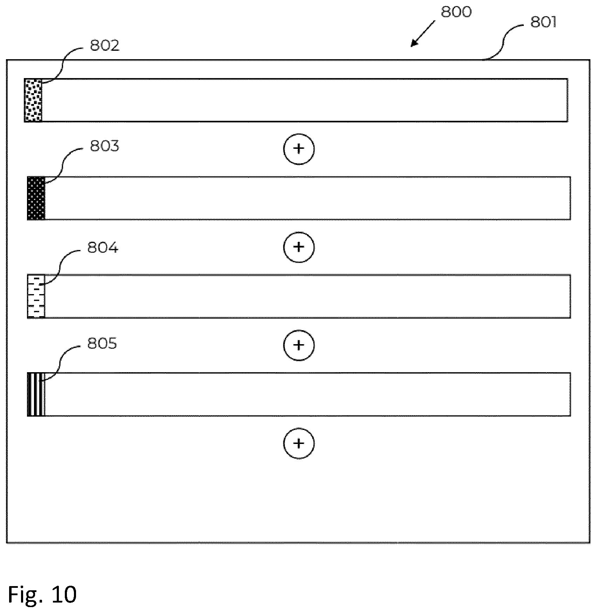

Further, Fig. 10 illustrates a method for creating program sequences by entering a recipe instruction sequence that can be used in conjunction with the system / method according to the present invention which can comprise such a user interface. According thereto a sequence of several process instructions can be input in arbitrary sequence.

Particularly, portioning instructions 802 for the control of the portioning module 100 can be specified by inputting several parameters, such as type of ingredient and quantity thereof.

Further, preparation instructions 803 for the control of the preparation module 200 can be specified by inputting several parameters, such as power, temperature, humidity, duration, rotation frequency (e.g. of the rollers), rotation speed (e.g. of the rollers).

Furthermore, preparation instructions 804 for the control of a topping module that arranges toppings on a dish can be specified by inputting several parameters, such as ingredient type, quantity thereof, placement position on the respective dish.

Further, secondary process instruction 805 for the control of a dishwashing module 400 or a peripherals module can be specified by inputting several parameters, such as rinse program, temperature, suction intensity, air cleaning mode and others.

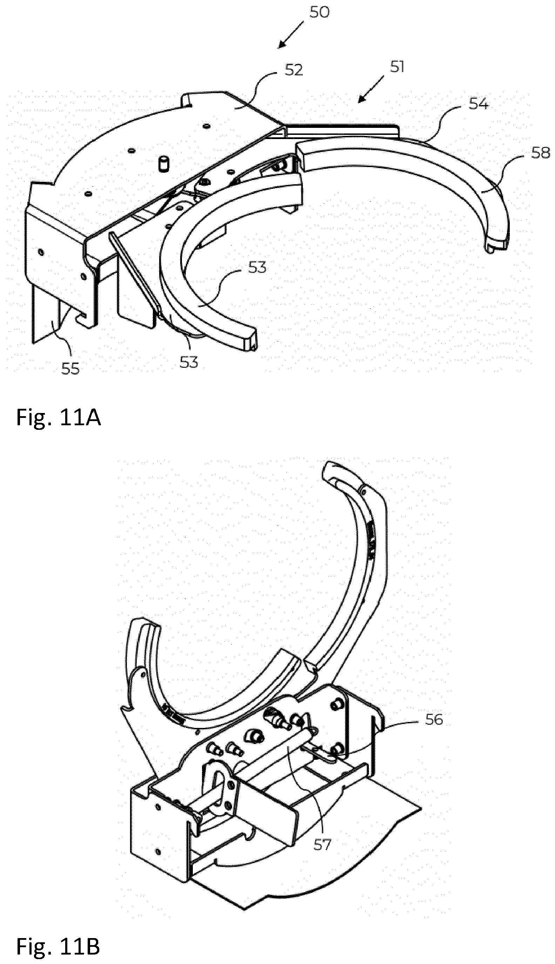

Finally, Fig. 11 shows an embodiment of a mechanical bi-stable, passive gripper extension 51 that can pick up receptacles such as bowls or plates without the need for an active drive. Preferably, mechanical gripper 51 comprises a support structure 52 having a contact surface 55 configured to couple (e.g. magnetically) to the gripper 21 of the end effector 20 of a robot module 40 (or of another robot arm 10 described herein). A fixed finger 53 is connected to the support structure 52.

Due to a spring element 57, a movable finger 54 is movable in both open as well as closed positions in a statically stable position.

Due to the movement of the robot arm, a lever 56 comprised by the gripper 51 is pressed against an edge (e.g. of a module of the system) and thus actuates a mechanism for closing or opening the pivotable finger 54 so that the latter ends up in its stable closed or stable open position.

By arranging an (e.g. exchangeable) attachment 58 on the pivotable lever 54, the latter can be adapted to different receptacle geometries that can then be gripped.

All modules described herein, i.e., the robot module 40, the portioning module 100, the transfer module 500, the dishwashing module 400 and the preparation module 200 each form an aspect of the present invention on their own and may therefore each be claimed separately omitting structural or functional relations to the other modules.

In the following, aspects of the present invention and embodiments thereof are stated as items. These items may however also be formulated as claims of the present application. The reference numerals stated in parentheses relate to the Figures of the present application.

Item 1: A system for robot-based preparation of food, comprising:
- a portioning module (100) configured to receive ingredients of the food, wherein the portioning module (100) comprises a portioning unit (150) configured to portion ingredients into a receptacle (90) configured to receive the portioned ingredients, and
- a robot module (40) comprising an end effector (20) configured to grip the receptacle (90), wherein the robot module (40) is configured to transport the receptacle (90) and the portioned ingredients therein from the portioning module (100) to another position away from the portioning module (100) for processing the portioned ingredients.

Item 2: The system according to item 1, wherein the portioning module (100) comprises a housing (31) defining a workspace (45) of the portioning module and/or wherein the robot module (40) comprises a housing (31) defining a workspace (45) of the robot module (40).

Item 3: The system according to item 2, wherein the respective housing (31) comprises at least one interface for connecting the housing to at least one interface of an adjacent housing (31) of a module so that the workspace (45) of the respective housing communicates with a workspace (45) of the adjacent housing (31), wherein the respective housing (31) is configured to be connected to the adjacent housing (31) by multiple fastening means (34).

Item 4: The system according to item 2 or 3, wherein the housing (31) of the portioning module (100) and the housing (31) of the robot module (40) each comprise at least one interface for connecting the housing (31) of the portioning module (100) to the housing (31) of the robot module (40), so that the workspace of the portioning module (100) communicates with a workspace (45) of the robot module (40), wherein the housing (31) of the portioning module (100) is configured to be connected to the housing (31) of the robot module (40) by multiple fastening means (41).

Item 5: The system according to item 3 or 4, wherein the at least one interface of the respective housing (31) surrounds an access opening of the respective housing (31), the access opening being formed in a lateral side of the respective housing (31) and allowing access to the workspace of the respective housing.

Item 6: The system according to one of the items 3 to 5, wherein one of the two interfaces comprises a sealing (36) or wherein a sealing (36) is configured to be arranged between the two interfaces such that the connected workspaces are sealed from an outside of the system by the sealing (36).

Item 7: The system according to one of the items 2 to 6, wherein the end effector (20) of the robot module (40) is movably connected to a top wall of the housing (31) of the robot module (40) via a robot arm (10), such that the end effector (20) is configured to be moved within the workspace (45) of the robot module (40).

Item 8: The system according to item 7, wherein the robot arm (10) comprises at least one rotary actuator, such that the end effector (20) is configured to be pivoted about a pivot axis defined by the rotary actuator, wherein preferably the robot arm (10) comprises multiple rotary actuators, particularly six rotary actuators, wherein each rotary actuator defines a respective pivot axis, such that the end effector (20) is configured to be pivoted about multiple pivot axes defined by the rotary actuators, or wherein the robot arm is further configured to be moved along three different linear axes.

Item 9: The system according to one of the items 7 to 8, wherein the robot arm (10) is connected to the top wall (43) of the housing (31) of the robot module by an actuator (41), such that the complete robot arm (10) is configured to be moved along an axis within the workspace (45) of the robot module (40).

Item 10: The system according to one of the preceding items, wherein the robot module (40) is configured to move the end effector (20) into a workspace (45) defined by a housing of an adjacent module that is connected to the robot module.

Item 11: The system according to one of the items 7 to 10, wherein the robot arm (10), comprises a receptacle scale (23) configured to determine a weight of the receptacle (90) and the portioned ingredients therein when the receptacle is held by the end effector (20).

Item 12: The system according to one of the preceding items, wherein the robot module (40) comprises a control unit (12) configured to control movement of the end effector (20).

Item 13: The system according to one of the preceding items, wherein the end effector (20) comprises a gripper (21) configured to grip the receptacle (90) by providing a magnetic field to attract and hold the receptacle (90).

Item 14: The system according to one of the items 1 to 12, wherein the end effector (20) comprises a mechanical gripper (51) comprising a fixed finger (53) and a pivotable finger (54) to grip a receptacle (90), wherein the pivotable finger (54) is bi-stable and comprises a stable closed position and a stable open position.

Item 15: The system according to one of the preceding items, wherein the portioning module (100) comprises at least one container (154) for storing an ingredient.

Item 16: The system according to item 15, wherein the at least one container (154) is configured to be arranged in a holding structure of the portioning module (100).

Item 17: The system according to item 16, wherein the portioning module (100) is configured to be connected to the robot module (40) such that the holding structure is arranged on a first side (103) of the portioning module (100) facing away from the robot module (40) so that the holding structure can be accessed from the first side (103).

Item 18: The system according to one of the items 15 to 17, wherein the portioning unit (150) comprises a conveying unit (155) for the at least one container (154), the conveying unit (155) being configured to convey the ingredient from the at least one container (154) towards a dosing chamber (166) of the portioning unit (150).

Item 19: The system according to item 18, wherein portioning unit (150) comprises a control unit (160) that is configured to control a conveying rate of the conveying unit (155), such that a predetermined amount of the ingredient controlled by the control unit (160) can be conveyed towards the dosing chamber (166).

Item 20: The system according to item 18 or 19, wherein the conveying unit (155) is arranged below the at least one container (154), wherein particularly the at least one container (154) is configured to be fastened on top of the conveying unit (155), such that an ingredient residing in the at least one container (154) can fall into the conveying unit (155) below the at least one container (154) and can be conveyed towards the associated dosing chamber (166).

Item 21: The system according to one of the items 18 to 20, wherein the conveying unit (155) comprises a flap (158) configured to provide a connection between the conveying unit (155) and the associated dosing chamber (166) arranged below the flap (158), such that a conveyed ingredient can fall into the associated dosing chamber (166) when the flap (158) is open. Item 22: The system according to one of the items 18 to 21, wherein the dosing chamber comprises a dosing flap (167), wherein the dosing flap is configured to be opened to let an ingredient fall out of the respective dosing chamber into said receptacle (90) when being held by the end effector (20) of the robot module (40) below the dosing chamber (166).

Item 23: The system according to item 18 to 22, wherein the portioning unit (150) comprises a scale (163) configured to measure a total weight of the dosing chamber (166) and the portioned ingredient therein.

Item 24: The system according to item 23, wherein the system is configured to use the scale (163) to check whether the dosing chamber (166) has been mounted to the portioning unit (150), and/or wherein the system is configured to use the scale (163) in combination with an actuator of the conveying unit (155) and the control unit to optimize a control strategy for the respective ingredient.

Item 25: The system according to one of the items 19 to 24, wherein the control unit (160) is configured to control a rotary actuator (161) of the portioning unit (150) depending on the ingredients in the at least one container (154) to drive a spindle arranged in the conveying unit (155) via a clutch (157) to convey an ingredient from the at least one container (154) into the associated dosing chamber (166) until the ingredient conveyed into the associated dosing chamber comprises a desired weight as weighed by means of the scale (163), whereupon the control unit (166) is configured to generate a control signal to let an actuator (164) of the portioning unit (150) cause a pivoting movement of the dosing flap (167) thereby opening the dosing flap (167) so that the ingredient falls into the receptacle (90), and wherein the control unit (160) is configured to compare a weight of the ingredient that has fallen into the dosing chamber as measured by the scale (163) against the weight as measured by the receptacle scale (23).

Item 26: The system according to one of the items 1 to 25, wherein the portioning unit (150) comprises a sealing wall (102a) separating the at least one container (154) from the associated dosing chamber (166), wherein the sealing wall (102a) comprises a through-opening for the conveying unit (155), such that an ingredient can be conveyed from the container (154) towards the associated dosing chamber (166) via the conveying unit (155) through said through-opening.

Item 27: The system according to one of the preceding items, wherein the system further comprises a preparation module (200) comprising a preparation unit (210) for preparing ingredients residing in the receptacle (90).

Item 28: The system according to item 27, wherein a housing of the preparation module (200) comprises at least one interface for connecting the housing of the preparation module (200) to the housing of the robot module (40), so that a workspace of the preparation module defined by the housing of the preparation module communicates with the workspace (45) of the robot module (40), wherein preferably the housing of the preparation module (200) is configured to be connected to the housing of the robot module by multiple fastening means (34).

Item 29: The system according to item 27 or 28, wherein the preparation unit (210) comprises at least one receptacle carrier (211) arranged on a first side of the preparation module (200), which first side is configured to face the robot module (40), wherein the robot module (40) is configured to transport the receptacle (90) and the portioned ingredients therein from the portioning module (100) to the at least one receptacle carrier (211) of the preparation unit (210) for preparing the portioned ingredients by the preparation unit (210).

Item 30: The system according to one of the items 27 to 29, wherein the preparation unit (210) comprises a heating device that is configured to heat the receptacle (90) and the portioned ingredients therein.

Item 31: The system according to item 29 or 30, wherein the receptacle carrier (211) comprises at least three rollers (213) configured for contacting an outside of the receptacle (90) so as to receive it in a central area between the rollers (213), wherein the rollers (213) are arranged parallel to each other and configured to be set in rotation around a respective roller axis of the respective roller (213), such that a rotation of the rollers (213) causes a rotation of the receptacle (90) comprising the portioned ingredients.

Item 32: The system according to item 30 or 31, wherein the preparation module comprises a control unit that is configured to control an actuator, the actuator being configured to generate a rotation of at least one of the rollers (213), such that the rotation of the receptacle (90) can be controlled by the control unit, and/or wherein the control unit is configured to control said heating of said receptacle (90).

Item 33: The system according to item 31 or 32, wherein the rollers are inclined with respect to a vertical axis, preferably by an angle between 0° and 60, more preferably 35° to 45°, wherein preferably, said angle is adjustable to a desired value between 0° and 60°, and wherein preferably said angle is non-zero and the preparation unit is configured to temporarily adjust the angle to 0°.

Item 34: The system according to one of the preceding items, wherein the system further comprises a dishwashing module (400) comprising a dishwashing unit (401) for washing receptacles (90) and a housing (31) defining a workspace of the dishwashing unit (400).

Item 35: The system according to item 34, wherein the dishwashing module (400) comprises a robot arm (10), wherein the robot arm (10) is configured to load receptacles (90) into a rinsing space of the dishwashing unit (401) and to unload cleaned receptacles (90) from the rinsing space of the dishwashing unit (401)

Item 36: The system according to one of the items 34 to 35, wherein the system comprises transfer module (500) comprising a housing (31) defining a workspace of the transfer module (400), the housing (31) comprising an interface configured to be connected to an interface of the housing of the dishwashing module to connect the workspace of the transfer module (500) to the workspace of the dishwashing module (400), wherein the transfer unit (500) is configured to:
- receive at least one receptacle (90) to be cleaned from the robot module (40) at a loading zone (503) when the robot module (40) is connected to the transfer module (500),
- transfer the receptacle (90) to be cleaned from the loading zone (503) to a gripping zone (505) of the workspace of the transfer module (500), wherein an end effector (20) of the robot arm (10) of the dishwashing module (400) is configured to grip the receptacle (90) in the gripping zone (505) and arrange it on a receptacle carrier rack (404) in the rinsing space of the dishwashing unit (401),
- receive a cleaned receptacle (90) at a storage zone (506) from the robot arm (10) of the dishwashing module (400), and
- transfer the cleaned receptacle (90) from the storage zone (506) to an unloading zone (504) of workspace of the transfer module (500).

Item 37: The system according to item 35, wherein the transfer unit comprises a first receptacle conveyor configured to transport the receptacle (90) to be cleaned from the loading zone to the gripping zone (505), and a second conveyor to transport the cleaned receptacle (90) from the storage zone to the unloading zone (504).

Item 38: The system according to one of the preceding items, wherein the system comprises a user interface configured to allowing a user to input a recipe instruction sequence by inputting a sequence of process instructions in arbitrary order, wherein the user interface preferably allows at least one of:
- Input of portioning instructions for controlling the portioning module (100), the portioning instructions preferably comprising at least one of: type of an ingredient, quantity of the ingredient;
- Input of preparation instructions for controlling the preparation module (200), the preparation instructions preferably comprising at least one of the following parameters: an electrical power, a temperature, a humidity, a duration, a rotation frequency, a duration of the rotation;
- Input of preparation instructions for controlling a topping module of the system, the topping module being configured to provide a topping on top of a dish, the preparation instructions preferably comprising at least one of the following parameters: type of an ingredient, quantity of the ingredient, placement position of the topping on the dish;
- Input of secondary process instructions for controlling the dishwashing module (400), the secondary process instructions preferably comprising at least one of the following parameters: rinse program, temperature;
- Input of secondary process instructions for controlling a periphery module of the system, the secondary process instructions preferably comprising one of the following parameters: suction intensity, air cleaning mode.

Item 39: A method for robot-based preparation of food, particularly using a system according to one of the preceding items, comprising:
- automatically portion ingredients into a receptacle (90) by a portioning module, and
- automatically gripping the receptacle (90) by a robot module, and transporting, by the robot module (40), the receptacle (90) and the portioned ingredients therein from the portioning module (100) to another position away from the portioning module (100) for processing the portioned ingredients.

Item 40: The method according to item 39, wherein said portioning is controlled based on one, several, or all of:
- an actual weight of a dosing chamber (166) and the portioned ingredient therein,
- a conveying rate of a conveying unit (155) of the portioning module (100), which conveying unit (155) conveys an ingredient from a container (154) to the dosing chamber (166),
- an actual weight of the receptacle (90) including portioned ingredients therein measured by a receptacle scale (23) of an end effector (20) of a robot arm (10) of the robot module (40).

Item 41: The method according to one of the items 39 to 40, wherein during automatically portioning ingredients, the receptacle (90) held by the end effector (20) is moved relative to the portioning module (100) along multiple dosing chambers to portion ingredients into the receptacle (90).

Item 42: The method according to one of the items 39 to 41, wherein the robot module (40) transports the receptacle (90) to one of the following modules:
- a preparation module (200) for preparing the portioned ingredients,
- a transfer module (500) for transporting the receptacle to a dishwashing module (400),
- a dishwashing module (400) for dishwashing the receptacle.

Item 43: The method according to one of the items 39 to 42, wherein the receptacle (90) and the portioned ingredients therein are heated by the preparation module (200), wherein a temperature of the receptacle (90) and a time period during which the receptacle (90) is heated is controlled.

Item 44: The method according to one of the items 39 to 43, wherein the at least one receptacle (90) is automatically rotated by the preparation module (200) around a rotation axis, wherein a rotation frequency and/or a duration of the rotation of the receptacle (90) is controlled, wherein preferably the rotation axis encloses an acute angle with the vertical axis in the range from 0° to 60°, preferably 35° to 45°.

Item 45: The method according to one of the items 39 to 44, wherein the receptacle (90) is automatically loaded by a robot arm (10) of a dishwashing module (400) into a rinsing space of a dishwashing unit (401) of the dishwashing module (440) and washed therein and subsequently automatically unloaded by the robot arm (10) from the rinsing space of the dishwashing unit (401).

Item 46: The method according to one of the items 39 to 45, wherein the receptacle is automatically transported by a transfer module to the dishwashing module, wherein
- the receptacle is received at a loading zone by the transfer module from a robot module,
- the receptacle (90) is transferred from the loading zone (503) to a gripping zone (505) of the transfer module (500), wherein said robot arm (10) of the dishwashing module (400 grips the receptacle (90) in the gripping zone (505) and arranges it on a receptacle carrier rack (404) in the rinsing space of the dishwashing unit (401),
- the cleaned receptacle (90) is transferred from the rinsing space by the robot arm (10) of the dishwashing module (400) to a storage zone of the transfer module, and
- the cleaned receptacle (90) is transferred from the storage zone (506) to an unloading zone (504) of the transfer module (500).

Item 47: The method according to one of the items 39 to 46, comprising receiving from a user by a user interface of the system a recipe instruction sequence comprising a sequence of process instructions, wherein preferably at least one of the following process instructions are input by the user:
- Portioning instructions for controlling the portioning module (100), the portioning instructions preferably comprising at least one of the following parameters: type of an ingredient, quantity of the ingredient;
- Preparation instructions for controlling the preparation module (200), the preparation instructions preferably comprising at least one of the following parameters: an electrical power, a temperature, a humidity, a duration, a turning frequency, a turning speed, a rotation frequency, a duration of the rotation;
- Preparation instructions for controlling a topping module of the system, the topping module being configured to provide a topping on top of a dish, the preparation instructions preferably comprising at least one of the following parameters: type of an ingredient, quantity of the ingredient, placement position of the topping on the dish;
- Secondary process instructions for controlling the dishwashing module (400), the secondary process instructions preferably comprising at least one of the following parameters: rinse program, temperature;
- Secondary process instructions for controlling a periphery module of the system, the secondary process instructions preferably comprising at least one of the following parameters: suction intensity, air cleaning mode.

Item 48: A method using a system for robot-based preparation of food, particularly a system according to one of the items 1 to 38, the system comprising a planning optimizer module (602) and a process execution module (603), wherein the method comprises:
- receiving at least one order input for food comprising ingredients to be prepared by the system by an ordering interface (601) of the system,
- providing initial status information to the planning optimizer module (602) about a status of the modules of the system,
- based on the order input, the initial status information and at least one parameter to be minimized, determine, by the planning optimizer module (602), a preparation plan for preparation of the food, wherein the initial status (605) information is indicative of the status of the modules of the system at the beginning of said determination of the preparation plan,
- providing the preparation plan to the process execution module (603) which generates control signals (604) that cause the system to prepare the food based on the preparation plan and under consideration of status information (606) about the actual status of the modules of the system and minimization of the at least one parameter to be minimized.

Item 49: The method according to item 48, wherein the method further comprises transferring the at least one order input to the planning optimizer module (602).

Item 50: The method according to item 48, wherein the method further comprises transferring the at least one order input to the process execution module (603), wherein the planning optimizer module (602) receives the order input from the process execution module (603).

Item 51: The method according to item 50, wherein the initial status information (605) is also provided to the process execution module (603).

Item 52: The method according to one of the items 48 to 51, wherein the process execution module (602) provides an optimized current preparation plan as input to the planning optimizer module (602).

Item 53: The method according to one of the items 48 to 52, wherein the planning optimizer module (602) outputs information to a user interface and software interface about the current preparation plan, and/or wherein the process execution module outputs information to a user interface and a software interface about the execution of the current preparation plan.

Item 54: The method according to one of the items 48 to 53, wherein the at least one parameter to be minimized comprises or is one of the following:
- a preparation time for preparing the food according to the order input, defined by the time between the provision of the order input and the provision of the prepared food,
- an energy consumption of the system required to prepare the ingredients according to the input order.
- a sum of preparation times of several dishes ordered at the same time, particularly under the constraint that differences in preparation times between any two of the several dishes shall be minimal.

Item 55: The method according to one of the items 48 to 54, wherein the food is prepared according to a preselected priority, which causes at least a first dish corresponding to a first order input to be prepared before at least a second dish corresponding to a subsequent second order input.

Item 56: The method according to one of the items 48 to 55, wherein in the preparation plan the start of a preparation of a dish is delayed so that a completion time of the dish fits exactly into a desired schedule.

Item 57: The method according to one of the items 48 to 56, wherein parameters of a process step in the preparation plan are altered towards the end so that the process step s either extended or delayed.

Item 58: A computer program, comprising instructions which, when the computer program is executed by the system according to one of the items 1 to 38, cause the system to execute a method according to one of the items 39 to 57.

## Claims

1. A system for robot-based preparation of food, comprising:
- a portioning module (100) configured to receive ingredients of the food, wherein the portioning module (100) comprises a portioning unit (150) configured to portion ingredients into a receptacle (90) configured to receive the portioned ingredients, and
- a robot module (40) comprising an end effector (20) configured to grip the receptacle (90), wherein the robot module (40) is configured to transport the receptacle (90) and the portioned ingredients therein from the portioning module (100) to another position away from the portioning module (100) for processing the portioned ingredients.

2. The system according to claim 1, wherein the portioning module (100) comprises a housing (31) defining a workspace (45) of the portioning module and/or wherein the robot module (40) comprises a housing (31) defining a workspace (45) of the robot module (40).

3. The system according to claim 2, wherein the respective housing (31) comprises at least one interface for connecting the housing to at least one interface of an adjacent housing (31) of a module so that the workspace (45) of the respective housing communicates with a workspace (45) of the adjacent housing (31), wherein the respective housing (31) is configured to be connected to the adjacent housing (31) by multiple fastening means (34), and/or wherein the housing (31) of the portioning module (100) and the housing (31) of the robot module (40) each comprise at least one interface for connecting the housing (31) of the portioning module (100) to the housing (31) of the robot module (40), so that the workspace of the portioning module (100) communicates with a workspace (45) of the robot module (40), wherein the housing (31) of the portioning module (100) is configured to be connected to the housing (31) of the robot module (40) by multiple fastening means (41).

4. The system according to claim 3, wherein the at least one interface of the respective housing (31) surrounds an access opening of the respective housing (31), the access opening being formed in a lateral side of the respective housing (31) and allowing access to the workspace of the respective housing, and/or wherein one of the two interfaces comprises a sealing (36) or wherein a sealing (36) is configured to be arranged between the two interfaces such that the connected workspaces are sealed from an outside of the system by the sealing (36).

5. The system according to one of the claims 2 to 4, wherein the end effector (20) of the robot module (40) is movably connected to a top wall of the housing (31) of the robot module (40) via a robot arm (10), such that the end effector (20) is configured to be moved within the workspace (45) of the robot module (40), wherein preferably the robot arm (10) comprises at least one rotary actuator, such that the end effector (20) is configured to be pivoted about a pivot axis defined by the rotary actuator, wherein preferably the robot arm (10) comprises multiple rotary actuators, particularly six rotary actuators, wherein each rotary actuator defines a respective pivot axis, such that the end effector (20) is configured to be pivoted about multiple pivot axes defined by the rotary actuators, or wherein preferably the robot arm is further configured to be moved along three different linear axes.

6. The system according to one of the claim 5, wherein the robot arm (10) is connected to the top wall (43) of the housing (31) of the robot module by an actuator (41), such that the complete robot arm (10) is configured to be moved along an axis within the workspace (45) of the robot module (40), and/or wherein the robot module (40) is configured to move the end effector (20) into a workspace (45) defined by a housing of an adjacent module that is connected to the robot module, and/or wherein the robot arm (10), comprises a receptacle scale (23) configured to determine a weight of the receptacle (90) and the portioned ingredients therein when the receptacle is held by the end effector (20).

7. The system according to one of the preceding claims, wherein the end effector (20) comprises a gripper (21) configured to grip the receptacle (90) by providing a magnetic field to attract and hold the receptacle (90), or wherein the end effector (20) comprises a mechanical gripper (51) comprising a fixed finger (53) and a pivotable finger (54) to grip a receptacle (90), wherein the pivotable finger (54) is bi-stable and comprises a stable closed position and a stable open position.

8. The system according to one of the preceding claims, wherein the portioning module (100) comprises at least one container (154) for storing an ingredient, wherein the at least one container (154) is configured to be arranged in a holding structure of the portioning module (100), wherein the portioning module (100) is configured to be connected to the robot module (40) such that the holding structure is arranged on a first side (103) of the portioning module (100) facing away from the robot module (40) so that the holding structure can be accessed from the first side (103), wherein the portioning unit (150) comprises a conveying unit (155) for the at least one container (154), the conveying unit (155) being configured to convey the ingredient from the at least one container (154) towards a dosing chamber (166) of the portioning unit (150).

9. The system according to claim 8, wherein portioning unit (150) comprises a control unit (160) that is configured to control a conveying rate of the conveying unit (155), such that a predetermined amount of the ingredient controlled by the control unit (160) can be conveyed towards the dosing chamber (166), wherein the conveying unit (155) is arranged below the at least one container (154), wherein particularly the at least one container (154) is configured to be fastened on top of the conveying unit (155), such that an ingredient residing in the at least one container (154) can fall into the conveying unit (155) below the at least one container (154) and can be conveyed towards the associated dosing chamber (166), and wherein the conveying unit (155) comprises a flap (158) configured to provide a connection between the conveying unit (155) and the associated dosing chamber (166) arranged below the flap (158), such that a conveyed ingredient can fall into the associated dosing chamber (166) when the flap (158) is open.

10. The system according to claim 9, wherein the dosing chamber comprises a dosing flap (167), wherein the dosing flap is configured to be opened to let an ingredient fall out of the respective dosing chamber into said receptacle (90) when being held by the end effector (20) of the robot module (40) below the dosing chamber (166), wherein the portioning unit (150) comprises a scale (163) configured to measure a total weight of the dosing chamber (166) and the portioned ingredient therein, and wherein the system is configured to use the scale (163) to check whether the dosing chamber (166) has been mounted to the portioning unit (150), and/or wherein the system is configured to use the scale (163) in combination with an actuator of the conveying unit (155) and the control unit to optimize a control strategy for the respective ingredient, and wherein the control unit (160) is configured to control a rotary actuator (161) of the portioning unit (150) depending on the ingredients in the at least one container (154) to drive a spindle arranged in the conveying unit (155) via a clutch (157) to convey an ingredient from the at least one container (154) into the associated dosing chamber (166) until the ingredient conveyed into the associated dosing chamber comprises a desired weight as weighed by means of the scale (163), whereupon the control unit (166) is configured to generate a control signal to let an actuator (164) of the portioning unit (150) cause a pivoting movement of the dosing flap (167) thereby opening the dosing flap (167) so that the ingredient falls into the receptacle (90), and wherein the control unit (160) is configured to compare a weight of the ingredient that has fallen into the dosing chamber as measured by the scale (163) against the weight as measured by the receptacle scale (23), and wherein particularly the portioning unit (150) comprises a sealing wall (102a) separating the at least one container (154) from the associated dosing chamber (166), wherein the sealing wall (102a) comprises a through-opening for the conveying unit (155), such that an ingredient can be conveyed from the container (154) towards the associated dosing chamber (166) via the conveying unit (155) through said through-opening.

11. The system according to one of the preceding claims, wherein the system further comprises a preparation module (200) comprising a preparation unit (210) for preparing ingredients residing in the receptacle (90), wherein a housing of the preparation module (200) comprises at least one interface for connecting the housing of the preparation module (200) to the housing of the robot module (40), so that a workspace of the preparation module defined by the housing of the preparation module communicates with the workspace (45) of the robot module (40), wherein preferably the housing of the preparation module (200) is configured to be connected to the housing of the robot module by multiple fastening means (34), wherein the preparation unit (210) comprises at least one receptacle carrier (211) arranged on a first side of the preparation module (200), which first side is configured to face the robot module (40), wherein the robot module (40) is configured to transport the receptacle (90) and the portioned ingredients therein from the portioning module (100) to the at least one receptacle carrier (211) of the preparation unit (210) for preparing the portioned ingredients by the preparation unit (210), wherein the preparation unit (210) comprises a heating device that is configured to heat the receptacle (90) and the portioned ingredients therein, wherein the receptacle carrier (211) comprises at least three rollers (213) configured for contacting an outside of the receptacle (90) so as to receive it in a central area between the rollers (213), wherein the rollers (213) are arranged parallel to each other and configured to be set in rotation around a respective roller axis of the respective roller (213), such that a rotation of the rollers (213) causes a rotation of the receptacle (90) comprising the portioned ingredients, wherein the preparation module comprises a control unit that is configured to control an actuator, the actuator being configured to generate a rotation of at least one of the rollers (213), such that the rotation of the receptacle (90) can be controlled by the control unit, and/or wherein the control unit is configured to control said heating of said receptacle (90), and wherein the preparation module comprises a control unit that is configured to control an actuator, the actuator being configured to generate a rotation of at least one of the rollers (213), such that the rotation of the receptacle (90) can be controlled by the control unit, and/or wherein the control unit is configured to control said heating of said receptacle (90), and wherein the rollers are inclined with respect to a vertical axis, preferably by an angle between 0° and 60, more preferably 35° to 45°, wherein preferably, said angle is adjustable to a desired value between 0° and 60°, and wherein preferably said angle is non-zero and the preparation unit is configured to temporarily adjust the angle to 0°.

12. The system according to one of the preceding claims, wherein the system further comprises a dishwashing module (400) comprising a dishwashing unit (401) for washing receptacles (90) and a housing (31) defining a workspace of the dishwashing unit (400), and wherein the dishwashing module (400) comprises a robot arm (10), wherein the robot arm (10) is configured to load receptacles (90) into a rinsing space of the dishwashing unit (401) and to unload cleaned receptacles (90) from the rinsing space of the dishwashing unit (401), and wherein the system comprises transfer module (500) comprising a housing (31) defining a workspace of the transfer module (400), the housing (31) comprising an interface configured to be connected to an interface of the housing of the dishwashing module to connect the workspace of the transfer module (500) to the workspace of the dishwashing module (400), wherein the transfer unit (500) is configured to:
- receive at least one receptacle (90) to be cleaned from the robot module (40) at a loading zone (503) when the robot module (40) is connected to the transfer module (500),
- transfer the receptacle (90) to be cleaned from the loading zone (503) to a gripping zone (505) of the workspace of the transfer module (500), wherein an end effector (20) of the robot arm (10) of the dishwashing module (400) is configured to grip the receptacle (90) in the gripping zone (505) and arrange it on a receptacle carrier rack (404) in the rinsing space of the dishwashing unit (401),
- receive a cleaned receptacle (90) at a storage zone (506) from the robot arm (10) of the dishwashing module (400), and transfer the cleaned receptacle (90) from the storage zone (506) to an unloading zone (504) of workspace of the transfer module (500).

13. A method for robot-based preparation of food, particularly using a system according to one of the preceding claims, comprising:
- automatically portion ingredients into a receptacle (90) by a portioning module, and
- automatically gripping the receptacle (90) by a robot module, and transporting, by the robot module (40), the receptacle (90) and the portioned ingredients therein from the portioning module (100) to another position away from the portioning module (100) for processing the portioned ingredients,
wherein particularly said portioning is controlled based on one, several, or all of:
- an actual weight of a dosing chamber (166) and the portioned ingredient therein,
- a conveying rate of a conveying unit (155) of the portioning module (100), which conveying unit (155) conveys an ingredient from a container (154) to the dosing chamber (166),
- an actual weight of the receptacle (90) including portioned ingredients therein measured by a receptacle scale (23) of an end effector (20) of a robot arm (10) of the robot module (40).

14. A method using a system for robot-based preparation of food, particularly a system according to one of the claims 1 to 12, the system comprising a planning optimizer module (602) and a process execution module (603), wherein the method comprises:
- receiving at least one order input for food comprising ingredients to be prepared by the system by an ordering interface (601) of the system,
- providing initial status information to the planning optimizer module (602) about a status of the modules of the system,
- based on the order input, the initial status information and at least one parameter to be minimized, determine, by the planning optimizer module (602), a preparation plan for preparation of the food, wherein the initial status (605) information is indicative of the status of the modules of the system at the beginning of said determination of the preparation plan,
- providing the preparation plan to the process execution module (603) which generates control signals (604) that cause the system to prepare the food based on the preparation plan and under consideration of status information (606) about the actual status of the modules of the system and minimization of the at least one parameter to be minimized.

15. A computer program, comprising instructions which, when the computer program is executed by the system according to one of the claims 1 to 12, cause the system to execute a method according to one of the claims 13 to 14.
